(19) Europäisches Patentamt / European Patent Office / Office européen des brevets

(11) **EP 1 922 879 B1**

(12) **EUROPÄISCHE PATENTSCHRIFT**

(45) Veröffentlichungstag und Bekanntmachung des Hinweises auf die Patenterteilung:
**14.04.2010 Patentblatt 2010/15**

(21) Anmeldenummer: **06763035.0**

(22) Anmeldetag: **25.08.2006**

(51) Int Cl.:
**H04N 7/26** (2006.01)

(86) Internationale Anmeldenummer:
**PCT/EP2006/008371**

(87) Internationale Veröffentlichungsnummer:
**WO 2007/028515 (15.03.2007 Gazette 2007/11)**

(54) **KODIERPARAMETERBESTIMMUNG FÜR EIN HYBRIDES KODIERSCHEMA**

DETERMINATION OF CODING PARAMETERS FOR A HYBRID CODING SCHEME

DETERMINATION DE PARAMETRES DE CODAGE POUR UN SCHEMA DE CODAGE HYBRIDE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **05.09.2005 DE 102005042134**

(43) Veröffentlichungstag der Anmeldung:
**21.05.2008 Patentblatt 2008/21**

(73) Patentinhaber: **Fraunhofer-Gesellschaft zur Förderung der angewandten Forschung e.V.
80686 München (DE)**

(72) Erfinder:
• **FÄRBER, Nikolaus
91052 Erlangen (DE)**
• **THOMA, Herbert
91058 Erlangen (DE)**

(74) Vertreter: **Schenk, Markus et al
Schoppe, Zimmermann, Stöckeler & Zinkler
Patentanwälte
Postfach 246
82043 Pullach bei München (DE)**

(56) Entgegenhaltungen:
**US-A1- 2003 086 495**

• **RAMCHANDRAN K ET AL: "BIT ALLOCATION FOR DEPENDENT QUANTIZATION WITH APPLICATIONS TO MULTIRESOLUTION AND MPEG VIDEO CODERS" IEEE TRANSACTIONS ON IMAGE PROCESSING, IEEE SERVICE CENTER, PISCATAWAY, NJ, US, Bd. 3, Nr. 5, 1. September 1994 (1994-09-01), Seiten 533-545, XP000476830 ISSN: 1057-7149**
• **KWOK W ET AL: "OBTAINING AN UPPER BAND IN MPEG CODING PERFORMANCE FROM JOINTLY OPTIMIZING CODING MODE DECISIONS AND RATE CONTROL" PROCEEDINGS OF THE SPIE, SPIE, BELLINGHAM, VA, US, Bd. 2669, 29. Januar 1996 (1996-01-29), Seiten 2-10, XP001130808 ISSN: 0277-786X**
• **ORTEGA A ET AL: "Forward-adaptive quantization with optimal overhead cost for image and video coding with applications to MPEG video coders" PROCEEDINGS OF THE SPIE, SPIE, BELLINGHAM, VA, US, Bd. 2419, 5. Februar 1995 (1995-02-05), Seiten 129-138, XP008030983 ISSN: 0277-786X**
• **SCHUSTER G M ET AL: "FAST AND EFFICIENT MODE AND QUANTIZER SELECTION IN THE RATE DISTORTION SENSE FOR H.263" PROCEEDINGS OF THE SPIE, SPIE, BELLINGHAM, VA, US, Bd. 2727, Nr. PART 2, 17. März 1996 (1996-03-17), Seiten 784-795, XP000617893 ISSN: 0277-786X**

- FARBER N ET AL: "Rate-Distortion Optimized Multipass Video Encoding with Application to MPEG-4" IMAGE PROCESSING, 2005. ICIP 2005. IEEE INTERNATIONAL CONFERENCE ON GENOVA, ITALY 11-14 SEPT. 2005, PISCATAWAY, NJ, USA,IEEE, 11. September 2005 (2005-09-11), Seiten 866-869, XP010851191 ISBN: 0-7803-9134-9
- THOMAS WIEGAND ET AL: "Rate-Distortion Optimized Mode Selection for Very Low Bit Rate Video Coding and the Emerging H.263 Standard" IEEE TRANSACTIONS ON CIRCUITS AND SYSTEMS FOR VIDEO TECHNOLOGY, IEEE SERVICE CENTER, PISCATAWAY, NJ, US, Bd. 6, Nr. 2, April 1996 (1996-04), XP011014299 ISSN: 1051-8215

- SULLIVAN G J ET AL: "RATE-DISTORTION OPTIMIZATION FOR VIDEO COMPRESSION" IEEE SIGNAL PROCESSING MAGAZINE, IEEE SERVICE CENTER, PISCATAWAY, NJ, US, Bd. 15, Nr. 6, November 1998 (1998-11), Seiten 74-90, XP001064929 ISSN: 1053-5888

**Beschreibung**

Die vorliegende Erfindung bezieht sich auf die Bestimmung der Kodierparameter eines hybriden Kodierschemas zur Verwendung für eine Kodierung einer Framesequenz mittels des hybriden Kodierschemas, wie z.B. zur Erzielung einer Kodierung mit möglichst optimalen Kompressionsrate-Verzerrung-Verhalten.

Die erfolgreichste Klasse von Videokompressionsentwürfen sind die sogenannten hybriden Kodierschemata, wie z.B. dem H.264/AVC. Bewegungskompensierte Prädiktion und anschließende Kodierung bzw. Transformation des Prädiktionsfehlers bzw. Restfehlers sind die grundlegenden Bausteine dieser Kodierschemata. Der Betrieb eines hybriden Videokodierers umfasst die Optimierung vieler Entscheidungen, um den bestmöglichen Kompromiss zwischen Kompressionsrate bzw. Rate und Verzerrung bzw. Bildverschlechterung unter Vorgabe von Beschränkungen bezüglich Kodierverzögerung und - komplexität zu erzielen. Aufgrund der Verwendung einer bewegungskompensierten Prädiktion bzw. Vorhersage hängen alle diese Entscheidungen typischerweise jedoch voneinander über viele Bilder bzw. Frames einer kodierten Sequenz hinweg voneinander ab.

Das bedeutet, dass es das Rahmenwerk der hybriden Kodierung, die bei allen gegenwärtigen Videokodierstandards, wie z.B. MPEG-2, MPEG-4 oder H.246/AVC, sehr schwierig macht, die Optimierung von Kodierentscheidungen bzw. Kodierparametern über die Zeit hinweg anzuwenden, d.h. mehrere aufeinanderfolgende Frames bzw. Bilder einer Videosequenz gemeinsam zu betrachten bzw. gemeinsam einer Optimierung zu unterziehen. Die Tatsache, dass Entscheidungen in einem augenblicklichen Frame einen erheblichen Einfluss auf das Rate-Verzerrung (R-D-; R-D = rate-distortion-) Verhalten von darauffolgenden bzw. zukünftigen Frames aufweist, führt zu einem abhängig arbeitenden Kodierschema mit einem exponentiell wachsenden Suchraum. Folglich wird eine R-D-Optimierung typischerweise auf einer Frame-zu-Frame-Basis durchgeführt. Solche Frame-zu-Frame-R-D-Optimierungen sind beispielsweise in A. Ortega, K. Ramchandran und M. Vetterli, "Bit Allocation for Dependent Quantization with Applications to Multiresolution and MPEG Video Coders", IEEE Transactions on Image Processing, Bd. 3, Nr. 5, Sept. 1994 und G.J. Sullivan und T. Wiegand, "Rate-Distortion Optimization for Video Compression", IEEE Signal Processing magazine, S. 74-90, Nov. 1998, beschrieben.

Ein Lösungsansatz, um nicht nur das augenblickliche Frame, sondern die gesamte Charakteristik einer Sequenz zu betrachten, besteht in der Multipass- bzw. Mehrfachdurchlaufkodierung. In einem ersten Kodierdurchlauf werden Daten über die Statistik der Framesequenz gesammelt, die dann analysiert werden, um einen zweiten Durchlauf zu optimieren. Die Ergebnisse aus dem zweiten Durchlauf werden dann für einen dritten Durchlauf verwendet usw. Obwohl Mehrdurchlauf-Kodierschemata normalerweise hilfreich sind, um die verfügbaren Bits auf intelligentere Art und Weise über die Framesequenz zu verteilen, sind dieselben üblicherweise nicht R-D-optimiert.

In Ramchandran K. et al.: "Bit Allocation for Dependent Quantization with Applications to Multiresolution and MPEG Video Coders" IEEE Transactions on Image Processing, IEEE Service Center, Piscataway, NJ, US, Bd. 3, Nr. 5, 1. September 1994 (1994-09-01), Seiten 533-545, XP000476830 ISSN: 1057-7149), wird eine Lösung für das Problem der optimalen Bitzuweisung in zeitlich und räumlich abhängigen Codierszenarios, wie z.B. dem MPEG-Codec beschrieben. Eine Raten/Verzerrungs-Optimierung wird verwendet, um einen optimalen Satz von Quantisierungsparametern zu finden. Insbesondere nutzen Ramchandran et al. die Erkenntnis aus, dass R/D-Charakteristiken von abhängigen Frames, d.h. P- oder B-Frames, eine Monotonizätseigenschaft aufweisen, insofern, als die Kostenfunktion oder auch die Verzerrung der abhängigen Frames umso kleiner ist, je kleiner die Quantisierungsschrittweite der zugrunde liegenden abhängigen Frames, d.h. der I-Frames ist. Aus dieser Beobachtung werden zwei Vereinfachungen bei der Auffindung der optimalen Sätze von Quantisierungsparametern mittels eines Viterbi-Algorithmus vorgeschlagen, bei dem die Knotenpunkte an einem bestimmten Frame im Hinblick auf Quantisierungsschrittweite sortiert sind. Wenn für eine bestimmte Quantisierungsschrittweite eines unabhängigen Frames die Kostenfunktion dieses Frames plus die Kostenfunktion des nachfolgenden Frames immer kleiner als für größere Schrittweiten ist, dann können Zweige, die von letzterer Schrittweite aus starten, nicht zu dem optimalen Pfad gehören. Auf ähnliche Weise können Verzweigungen nicht zum optimalen Pfad gehören, die zu Knotenpunkten an dem nachfolgenden abhängigen Frame mit Quantisierungsschrittweiten führen, die größer als eine vorbestimmte Schrittweite sind, und für die die Kostenfunktion dieses Frames immer kleiner als für die größeren Schrittweiten ist.

Die Aufgabe der vorliegenden Erfindung besteht darin, ein Verfahren und eine Vorrichtung zum Bestimmen einer Folge von Werten für einen Kodierparameter eines hybriden Kodierschemas für jedes Frame einer Framesequenz zur Verwendung für eine Kodierung der Framesequenz mittels des hybriden Kodierschemas zu schaffen, so dass eine R-D-Optimierung auf Frame-übergreifende Weise mit vertretbarem Aufwand ermöglicht wird.

Diese Aufgabe wird durch eine Vorrichtung gemäß Anspruch 1 und ein Verfahren gemäß Anspruch 14 gelöst.

Die Erkenntnis der vorliegenden Erfindung besteht darin, dass eine R-D-Optimierung bzw. Rate-Verzerrung-Optimierung auf Frame-übergreifende Art und Weise mit vertretbarem Aufwand erzielbar ist, wenn eine Mehrfachdurchlauf- bzw. Multipass-Kodierung und eine R-D-Optimierung zur Videokodierung kombiniert werden. Eine weitere Erkenntnis der vorliegenden Erfindung besteht nun darin, dass dies möglich ist, wenn zunächst in Vorab-Durchläufen die Kodierung der Framesequenz mittels des hybriden Kodierungsschemas für Stützfolgen von Werten für den Kodierungsparameter durchgeführt wird, die zur Kodierung jedes Frames der Framesequenz einen Wert aufweisen, der aus einem vorbestimmten Satz von vorbestimmten Werten für den Kodierparameter ausgewählt ist. Es ist nämlich nicht notwendig, alle möglichen $M^N$-Durchläufe durchzuführen, wobei M die Anzahl der vorbestimmten Werte des vorbestimmten Satzes von vorbestimmten Werten für den Kodierparameter angibt, und N die Anzahl von Frames der Framesequenz angibt. Vielmehr reicht es gemäß einer Erkenntnis der vorliegenden Erfindung aus, weitere Kodierungen auf echte Teilsequenzen der Framesequenz zu begrenzen, nämlich solche, die an dem ersten Frame der Framesequenz beginnen, und zwar obwohl diese eigentlich für eine R-D-Optimierung aufgrund der Unvollständigkeit noch nicht geeignet sind. Die vorerwähnte weitere Erkenntnis der vorliegenden Erfindung besteht nämlich darin, dass beobachtet worden ist, dass das R-D-Verhalten von zukünftigen bzw. nachfolgenden Frames der Framesequenz bzw. der entsprechend kodierten Frames nicht so sehr von der exakten Sequenz der Kodierung bzw. der für die vorhergehenden Frames verwendeten Kodierungsparameterwerte abhängt, sondern hauptsächlich von der Qualität oder Verzerrung des zuvor rekonstruierten Referenz-Frames. Diese Erkenntnis wird erfindungsgemäß dadurch ausgenutzt, dass für die Fortführung der Kodierung der echten Teilsequenz von Frames die tatsächlichen Verzerrungs- bzw. Bildqualitätswerte und Komprimierungsratewerte durch diejenigen Verzerrungs- und Komprimierungsratewerte abgeschätzt werden, die aus Kodierungen oder vorhergehenden Abschätzungen für eine Kodierung der Framesequenz erhalten worden sind, die für das letzte Frame dieser echten Teilsequenz einen Verzerrungswert aufweisen, der zu dem Verzerrungswert, wie er sich für die Kodierung der echten Teilsequenz mittels einer entsprechenden Fragmentfolge von Kodierparametern ergeben hat, ähnlich oder vergleichbar ist.

Gemäß einem speziellen Ausführungsbeispiel der vorliegenden Erfindung werden die Vorabkodierungen der Framesequenz unter Verwendung der unterschiedlichen Stützfolgen von Werten für den Kodierungsparameter für jedes Frame der Framesequenz mittels des hybriden Kodierungsschemas mit solchen Stützfolgen durchgeführt, die für die Frames der Framesequenz konstant einen jeweiligen unterschiedlichen aus dem vorbestimmten Satz von Werten für den Kodierungsparameter aufweisen. Diese Vorabkodierungen definieren Hauptpfade von einer Wurzel einer Baumstruktur zu deren Blättern. Bei der Kodierung der Framesequenz unter Verwendung der Stützfolgen von Kodierparameterwerten wird für jedes aktuelle Frame auch der Verzerrungs- und Kompressionsratenwert bestimmt, wie er sich mit einem anderen Wert aus dem vorbestimmten Satz von Kodierparameterwerten als dem des Hauptpfades ergeben würde. Das Ergebnis sind Pfade von der Wurzel der Baumstruktur, die von den Hauptpfaden an Verzweigungspunkten von dem Hauptpfad abzweigen, um sofort zu enden, wodurch unvollständige Pfade durch die Baumstruktur entstehen. Diese werden auf die Hauptpfade "zurückgeführt", indem der Verzerrungswert an den Enden dieser unvollständigen Pfade mit den Verzerrungswerten an den Knoten der Baumstruktur entlang der Hauptpfade in derselben Baumstrukturebene verglichen wird. Enden dieser unvollständigen Pfade werden somit über Übergangszweige von der vorhergehenden Baumstrukturebene in die aktuelle Baumstrukturebene auf die Hauptpfade zurückgeführt, wodurch sich ein Zustandsübergangsdiagramm ergibt, aus welchem ein optimaler Pfad derart ermittelt werden kann, dass er zu einer optimalen Folge von Kodierparameterwerten zur Kodierung der Frame-Frequenz in Hinblick auf einen gewünschten Kompromiss zwischen Komprimierungsrate und Bildqualität bzw. Bildverzerrung führt.

Bevorzugte Ausführungsbeispiele der vorliegenden Erfindung werden nachfolgend bezugnehmend auf die beiliegenden Zeichnungen näher erläutert. Es zeigen:

Fig. 1 ein Flussdiagramm eines Verfahrens zum Bestimmen einer optimalen Folge von Quantisierungsparametern mit anschließender Kodierung der Framesequenz unter Verwendung der optimalen Folge gemäß einem Ausführungsbeispiel der vorliegenden Erfindung;

Fig. 2 eine Baumstruktur zur Veranschaulichung der in dem Verfahren von Fig. 1 gesammelten Daten über Verzerrung und Kodierparametern für verschiedene Quantisierungsparameterfolgen;

Fig. 3 den Teilbaum der Baumstruktur von Fig. 2, der Kodierungen bzw. Quantisierungsparameterfolgen betrifft, zu denen Werte für die Verzerrung und die Komprimierungsrate ermittelt worden sind, mit schematischen Pfeilen zur Veranschaulichung der Rückführung der unvollständigen Pfade auf die Hauptpfade;

Fig. 4 ein sich ergebendes Zustandsübergangsdiagramm bzw. ein sich ergebendes Pfadgitternetz nach der Rückführung der unvollständigen Pfade auf die Hauptpfade;

Fig. 5 einen Graphen, in dem die sich ergebenden Komprimierungsrate/Verzerrungs-Tupel für alle möglichen Folgen von Quantisierungsparametern einerseits und die gemäß eines Verfahrens nach Fig. 1 bestimmten Folgen andererseits eingetragen sind;

Fig. 6 zwei Graphen zum Vergleich der sich ergebenden Rate/Verzerrungs-Paare für den Fall der Verwendung eines für alle Frames festen Quantisierungsparameters, für den Fall eines Verfahrens nach Fig. 1 und für den Fall der Verwendung von DivX für zwei verschiedene Testsequenzen (linker Graph, rechter Graph); und

Fig. 7    eine Tabelle zur Auflistung weiterer Vergleichsergebnisse für andere Testsequenzen.

Im folgenden wird bezugnehmend auf die Figuren ein Ausführungsbeispiel der vorliegenden Erfindung beschrieben, das auf die Auswahl eines optimalen Quantisierungsparameters (Q) für jedes Frame gerichtet ist, derart, dass insgesamt das Komprimierungsrate-Verzerrung-Verhältnis auf eine gewünschte Weise optimiert ist. Dabei wird darauf hingewiesen, dass die vorliegende Erfindung natürlich auch auf die Optimierung anderer Kodierparameter eines hybriden Kodierschemas angewendet werden kann, wie es im Anschluss an die Figurenbeschreibung noch detaillierter beschrieben wird.

Bei dem nachfolgend beschriebenen Ausführungsbeispiel sollte, wie für alle Mehrfachdurchlauf-Kodierungsschemata, eine höhere Variation der Bit-Rate und eine erhöhte Komplexität akzeptierbar sein, was jedoch für viele Anwendungen, die von MMS (Multimedia Messaging Service) bis DVD (Digital Versatile Disk) reichen, allerdings akzeptierbare Einschränkungen sind, da die Kodierung dort Offline bzw. vorab und lediglich einmal durchgeführt wird.

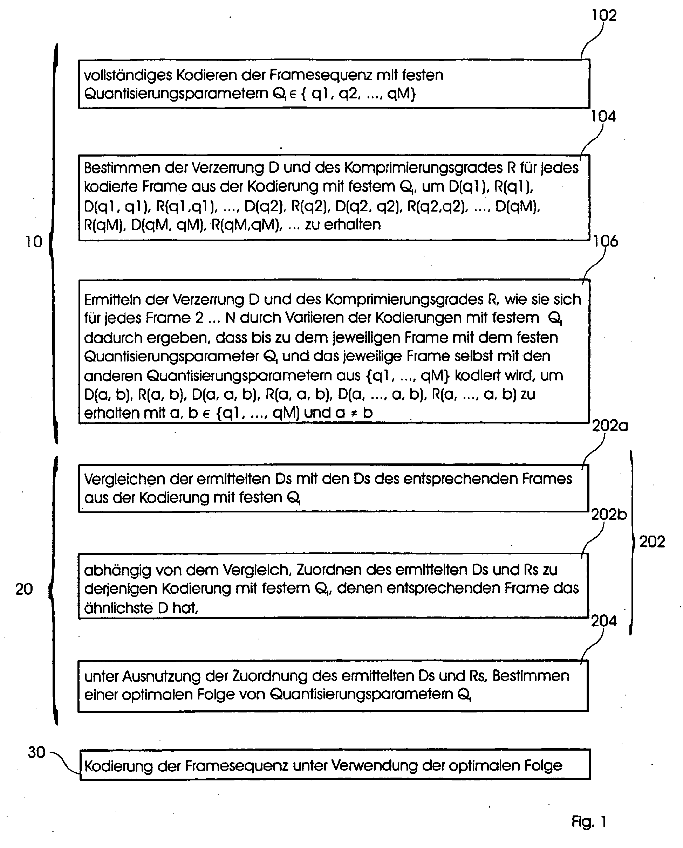

Vor der eigentlichen Beschreibung der Vorgehensweise zur Quantisierungsparameterbestimmung wird zunächst nochmal das eigentliche Problem formuliert. So dann wird der Algorithmus bezugnehmend auf die Fig. 1-4 beschrieben, woraufhin noch Kodierergebnisse vorgestellt werden, die sich durch Anwenden des Verfahrens nach Fig. 1-4 auf MPEG-4 SP ergaben, sowie ein Vergleich der Ergebnisse mit Ergebnissen, wie sie mittels DivX 5.2 als einem weiteren bekannten Mehrdurchlaufs-Kodierschema erhalten worden sind.

Hybride Kodierschemata führen zu einer Kodierung eines speziellen Frames aus einer Framesequenz durch Bewegungskompensierte Prädiktion des jeweiligen Frames aus Kodierungen vorangehender Frames der Framesequenz und anschließendes Kodieren des Prädiktionsfehlers. Gemäß dem nachfolgend beschriebenen Ausführungsbeispiel umfasst die anschließende Kodierung eine Quantisierung, wie z.B. eine Quantisierung der Pixelwerte des Differenzbildes oder eine Quantisierung der Transformationskoeffizienten eines Differenzbildes.

Problematisch ist nun, dass eine Variation des Quantisierungsparameters für ein spezielles Frame nicht nur zu einer Änderung der Verzerrung und Komprimierungsrate für das spezielle Frame führt, sondern aufgrund der Prädiktion ferner für eine Änderung der Verzerrung und Komprimierungsrate der nachfolgenden Frames. Die Quantisierungsparameter für die einzelnen Frames können deshalb nicht unabhängig voneinander ausgewählt bzw. optimiert werden. Vielmehr muss aufgrund der abhängigen Kodierung eine abhängige Optimierung verwendet werden, um die Quantisierungsparameter für die einzelnen Frames unter Berücksichtigung der gegenseitigen Beeinflussung zu bestimmen.

Zur Vereinfachung wird im folgenden insbesondere das Problem der abhängigen Kodierung von prädizierten Frames bzw. P-Frames betrachtet, wobei bi-direktional prädizierte Frames bzw. B-Frames zur Vereinfachung außer Acht gelassen werden und ferner keine Erzwingung von intra-kodierten bzw. in-sich-kodierten und in-sich-dekodierbare Frames bzw. I-Frames während der Kodierung verwendet wird, obwohl letzteres natürlich möglich ist. Anders ausgedrückt geht die nachfolgende Beschreibung von einem Kodiermuster von IPPP... P aus bzw. von einem hybriden Kodierschema mit einem Kodiermuster, nach welchem das erste Frame gemäß dem hybriden Kodierschema intra-kodiert wird, während die folgenden Frames der Framesequenz P-kodiert sind bzw. P-Frames sind und somit unter Prädiktion des Frames und Kodierung des Prädiktionsfehlers kodiert sind.

Im folgenden wird die Rate bzw. Kompressionsrate in einem Frame i mit R(Q1, Q2,..., Qi) bezeichnet, während die Verzerrung in einem Frame i mit D(Q1, Q2, ..., Qi) bezeichnet wird, wobei Qi den Quantisierungsstufenabstand bezeichnet, der für das Frame i verwendet worden ist, und wobei der Wert i die Position des Frames in der zu kodierenden Framesequenz anzeigt. Gemäß dem vorliegenden Ausführungsbeispiel entspricht R der Anzahl von Bits in dem Frame i, während D als das mittlere Fehlerquadrat (MSE; MSE = min (squared error) gemessen wird. Anders ausgedrückt entspricht R der Anzahl von Bits, die zur Kodierung des Frames i benötigt wird, während D das mittlere Fehlerquadrat über die Pixel des aus der Kodierung des Frames i erhaltenen dekodierten Frames ist. Es wird jedoch darauf hingewiesen, dass andere Definitionen für die Komprimierungsrate R und die Verzerrung D ebenfalls möglich sind.

Es wird betont, dass zur Bestimmung von R und D alle vorhergehenden Qs, d.h. die Quantisierungswerte, die zur Kodierung der vorhergehenden Frames herangezogen worden ist, bekannt bzw. spezifiziert sein müssen, nämlich aufgrund der oben sich wegen der Prädiktion ergebenden Abhängigkeit. Beispielsweise muss man sich gewahr sein, dass in einem Frame #2 R(1, Q2) ≠ R(10, Q2) und D(1, Q2) ≠ D(10, Q2) gilt, da die Qualität des ersten Frames bzw. die Kodierung des ersten Frames, die von dem zur Kodierung dieses Frames verwendeten Quantisierungsparameterwert Q1 abhängt und somit für Q1 = 1 größer ist als Q1 = 10, einen erheblichen Einfluss auf das Komprimierungsrate/Verzerrung-Ergebnis des zweiten Frames bzw. der Kodierung aufweist.

Ferner wird darauf hingewiesen, dass, wenn auf die Werte R und D gemeinsam verwiesen werden soll, bzw. der Kodierzustand im allgemeinen bezeichnet werden soll, die Schreibweise (Q1, Q2, ...., Qi) verwendet wird.

Die zu lösende Optimierungsaufgabe umfasst also die optimale Auswahl von Quantisierungswerten Qi* für jedes Frame i unter Einhaltung einer Ratebeschränkung $R_{max}$, und lässt sich formulieren als

$$\min_{Q1,Q2,\ldots QN} [D(Q1) + D(Q1, Q2) + \ldots + D(Q1, Q2, \ldots QN)]$$

unter der Nebenbedingung, dass

$$R(Q1) + R(Q1, Q2) + \ldots + R(Q1, Q2, \ldots QN) < R_{max}$$

Wie es beispielsweise in A. Ortega und K. Ramchandran, "Rate-Distortion Methods for Image and Video Compression", IEEE Signal Processing magazine, S. 23-50, Nov. 1998 beschrieben ist, läßt sich dieses Optimierungsproblem mit Zwangsbedingung durch das äquivalente, keiner Zwangsbedingung unterliegende Problem lösen:

$$\min_{Q1, Q2, \ldots QN} [J(Q1) + J(Q1, Q2) + \ldots + J(Q1, Q2, \ldots, QN)]$$

wobei                                                                                     (1)

$$J(Q1, Q2, \ldots, QN) = D(Q1, Q2, \ldots, QN) + \lambda R(Q1, Q2, \ldots QN)$$

die Lagrangian-Kosten (cost) und $\lambda \geq 0$ der Lagrange-Faktor ist, der verwendet wird, um den gewünschten Betriebspunkt auszuwählen, d.h. den Kompromiss zwischen Komprimierungsrate (rate) einerseits und Verzerrung (distortion) andererseits.

Das Problem des Lösens von Gleichung (1) liegt in dem exponentiellen Wachstum des Suchausmaßes begründet. Wenn M unterschiedliche Quantisierungswerte für jedes Frame in Betracht gezogen werden, müssen für eine Sequenz von N-Frames $M^N$-Kombinationen ausgewertet werden. Insbesondere die Datensammelphase, d.h. das Kodieren der Framesequenz $M^N$ Mal resultiert in einer Komplexität, die inakzeptabel ist.

Nachdem nun im vorhergehenden das Problem veranschaulicht worden ist, dem sich nachfolgende Ausführungsbeispiel für das Optimieren einer Folge von Quantisierungsparametern erfolgreich stellt, wird im folgenden noch vor der Beschreibung dieses Ausführungsbeispieles eine intuitive Erklärung dafür gegeben, wieso es wünschenswert ist, den Quantisierungsparameter Q überhaupt auf einer Frame-Basis zu optimieren. Als ein Beispiel werde ein Schnitt auf eine beinahe statische Szenerie bzw. Szene betrachtet. Falls das erste Frame nach dem Szenenschnitt mit einer sehr hohen Qualität kodiert wird, profitieren alle folgenden Frames aus dieser Kodierungsentscheidung, da sie einfach aus diesem mit hoher Qualität kodierten Frame für eine lange Zeit kopieren können. Folglich sollte dort ein sehr niedriger bzw. feiner Quantisierungsparameterwert Q ausgewählt werden. Falls jedoch die Szene nach dem Schnitt eine komplexe Bewegung und eine detaillierte Textur aufweist, ist die Situation gänzlich unterschiedlich. Dann werden die für das erste Frame bzw. für die Kodierung desselben aufgewendeten Bits nicht in gleichem Maße einen positiven Effekt auf die nachfolgenden bzw. zukünftigen Frames haben. Das im folgenden beschriebene Ausführungsbeispiel für eine Quantisierungsparameterfolgebestimmung wird jedoch automatisch solche Situationen erfassen, indem der Langzeit-R-D-Kompromiss ausgewertet und auf diese Weise der optimale Quantisierungswert Q für jedes Frame ausgewählt wird.

Im folgenden wird nun anhand von Fig. 1 ein Verfahren zur Bestimmung einer optimalen Folge von Quantisierungsparametern zur Verwendung in einem hybriden Kodierungsschema zur Kodierung einer Sequenz von Frames gemäß einem Ausführungsbeispiel der vorliegenden Erfindung beschrieben, wobei die Folge von Quantisierungsparametern bzw. Quantisierungsparameterwerten einen zu verwendenden Quantisierungsparameterwert für die Kodierung jeden Frames der Framesequenz angibt. Das Verfahren wird im folgenden auch manchmal als R-D-optimierter Mehrdurchlauf-Algorithmus bzw. RDM-Algorithmus bezeichnet.

Der RDM-Algorithmus ist im groben zunächst in drei Schritte unterteilt, die ihrerseits wieder in Teilschritte unterteilt sind, wobei letztere in Fig. 1 durch Rechtecke dargestellt sind, die durch geschweifte Klammern zu den drei gröberen Schritten zusammengefasst sind. Der erste Schritt 10 besteht in der Datensammlung, bei der die Framesequenz mehrfach unter Verwendung eines festen, aber für jeden Durchlauf unterschiedlichen Quantisierungsparameterwert Q kodiert wird. Bei dem ersten Schritt ergeben sich für jedes Frame der Framesequenz verschiedene Kodierzustände bzw. verschiedene Tupel aus Verzerrung und Komprimierungsrate, die die Kodierung des jeweiligen Frames unter Verwendung unterschiedlicher Quantisierungsparameterfolgen für das jeweilige Frame und die vorhergehenden Frames beschreiben. In dem zweiten Schritt 20 wird aus den so gesammelten R-D-Daten ein Gitternetz bzw. ein Zustandsübergangsdiagramm aufgebaut, wobei ein optimaler Pfad bzw. die optimale Folge von Quantisierungsparameterwerten $Qi^*$ unter Verwendung einer Kostenfunktion ausgewählt wird. Der Schritt 20 stellt somit den eigentlichen Optimierungsschritt dar. Dann, in einem letzten Schritt 30 wird unter Verwendung der erhaltenen optimalen Quantisierungsparameterwerte $Qi^*$ für jedes Frame, wie sie aus dem Optimierungsschritt 20 erhalten werden, eine schließliche Kodierung der Framesequenz durchgeführt, wodurch eine Kodierung der Framesequenz mit optimalem R-D-Kompromiss erhalten wird, mit Beschränkungen für die Richtigkeit im Einzelfall, wie es im folgenden noch erörtert wird.

Anders ausgedrückt stellen die ersten beiden Schritte 10 und 20 die eigentliche Bestimmung der optimalen Quantisierungsparameterwertfolge dar, während der Schritt 30 lediglich den abschließenden Kodierungsschritt unter Verwendung dieser Quantisierungsparameterwertfolge darstellt. Im folgenden liegt das Hauptaugenmerk deshalb auf den Schritten 10 und 20. Bei der Beschreibung der Teilschritte der Schritte 10 und 20 wird dabei zu Erläuterungszwecken ein stark vereinfachtes Beispiel herangezogen, bei dem die Anzahl der Frames der zu kodierenden Framesequenz N=3 beträgt, und als mögliche Werte für die Quantisierungsparameterwerte der gesuchten optimierten Quantisierungsparameterwertfolge M=3 unterschiedliche vorbestimmte Quantisierungsparameterwerte $Qi \epsilon \{2,4,6\}$ zugelassen werden, wobei jedoch natürlich auch andere Anzahlen von Frames und auch andere Anzahlen von möglichen Quantisierungsparameterwerten möglich sind.

Der Datensammelschritt 10 ist in drei Teilschritte unterteilt, von denen der erste Teilschritt 102 darin besteht, die zu kodierende Framesequenz unter Verwendung von unterschiedlichen Stützfolgen von Werten für den Quantisierungsparameter Qi für jedes Frame der Framesequenz mittels eines hybriden Kodierungsschemas zu kodieren. In anderen Worten ausgedrückt wird die Framesequenz aus N-Frames M mal vollständig kodiert. Als die unterschiedlichen Stützfolgen von Quantisierungsparameterwerten werden dabei solche Quantisierungsparameterfolgen mit festem Quantisierungsparameterwert Qi verwendet, und zwar jeweils mit einem unterschiedlichen Quantisierungsparameterwert Qi. In dem Schritt 102 wird somit die Framesequenz M mal unter Verwendung eines festen Quantisierungsparameterwertes $Qi \epsilon \{q1, q2, ...qM\}$ für alle N-Frames der Framesequenz kodiert. Der Schritt 102 wird dabei derart durchgeführt, dass für jedes Frame nicht nur dessen Kodierung, wie z.B. die jeweiligen quantisierten Transformationskoeffizienten des Prädiktionsfehlers, erhalten werden, sondern ferner auch das durch die Kodierung durch Dekodierung entstehende Frame. Zu diesem durch Kodierung erhaltenen Frame aus Schritt 102 wird in dem Teilschritt 104 jeweils die Verzerrung D und die Komprimierungsrate R bestimmt. Aus der ersten vollständigen Kodierung der Framesequenz bzw. dem ersten Durchlauf ergeben sich somit in dem Schritt 104 die R-D-Datenpunkte (q1), (q1, q1) .... Ähnliches gilt für die anderen Durchgänge, wobei aus dem M-ten Durchlauf aus Schritt 102 und Schritt 104 die Datenpunkte (qM), (qM, qM) ... resultieren.

Die Schritte 102 und 104 entsprechen somit einer Kodierung mit festem Quantisierungsparameter und bilden die Basis für den gesamten Mehrfachdurchlauf-Algorithmus. Durch Optimierung der Quantisierungsparameterwerte auf Frame-Basis wird erwartungsgemäß eine Kodierung erzielt, die besser als jede der M-Kodierungen mit festem Quantisierungswert ist.

Da eine Änderung des Quantisierungsparameterwertes von Frame zu Frame ermöglicht werden soll, reichen die in den Schritten 102 und 104 gemessenen Daten nicht aus. Vielmehr müssen zusätzliche Daten gemessen werden, was in dem dritten Teilschritt 106 des Datensammelschrittes 10 durchgeführt wird. Um entscheiden zu können, ob eine Änderung zu einem neuen Quantisierungsparameterwert Q bzw. einem anderen Quantisierungsparameterwert Q besser ist, als bei dem festen Quantisierungsparameter Q zu bleiben, muss bekannt sein, zu welcher Komprimierungsrate und Verzerrung diese Änderung führen würde. Folglich wird in dem Teilschritt 106 die Verzerrung D und die Komprimierungsrate R ermittelt, wie sie sich für jedes Frame 2... N durch Variieren der Kodierungen mit festem Qi dadurch ergeben, dass bis zu dem jeweiligen Frame mit dem festen Quantisierungsparameterwert Qi kodiert wird und das jeweilige Frame selbst mit den anderen Quantisierungsparameterwerten aus {q1, ...., qM} kodiert wird, wodurch weitere Datenpunkte (a, b) (a, a, b) ... (a, ...., a, b) mit (a, b) $\epsilon$ {q1, q2, ...qM} und $a \neq b$ erhalten werden.

Die Teilschritte 102 und 106 werden vorzugsweise miteinander verknüpft bzw. verschachtelt. Während die Kodierungsdurchläufe 102 mit festen Quantisierungsparameterwert durchgeführt werden, wird der Prädiktionsfehler nicht nur, wie für den Schritt 102 notwendig, mit dem jeweils festen Quantisierungsparameterwert Qi kodiert, sondern im Schritt 104 ferner auch mit den anderen Quantisierungsparameterwerten $Qj \neq i$, woraufhin an der jeweils entstehenden Kodierung für das jeweilige Frame die Werte R und D gemessen werden. Dass die eigentliche Kodierung in Schritt 102 stets nur mit dem festen Quantisierungsparameterwert Q für den jeweiligen Durchlauf durchgeführt wird, vermeidet ein exponentielles Anwachsen des Kodierungsaufwandes. Ferner ist vorteilhaft, dass zur Erlangung der zusätzlichen Werte D und R in dem Teilschritt 106 lediglich ein verhältnismäßig geringer Aufwand notwendig ist, da die Bewegungsschätzung bzw. die bewegungskompensierte Prädiktion aus der hybriden Kodierung des jeweiligen Frames, was meistens den komplexeren Teil der hybriden Kodierung ausmacht, lediglich einmal durchgeführt werden muss, zudem muß diese Prädiktion einmal sowieso für die vollständige Kodierung bzw. den vollständigen Kodierungsdurchlauf in Schritt 102 durchgeführt werden. Bei dem Teilschritt 106 muss lediglich noch die Kodierung des Prädiktionsfehlers mit den anderen Quantisierungsparameterwerten durchgeführt werden, wie es soeben beschrieben wurde.

Zusammenfassend können alle Datenpunkte, die in den Schritten 102-106 gesammelt werden, mit

```
(a,a, …, a, b), mit (a, b) ε {q1, q2, … qM}
```

beschrieben werden.

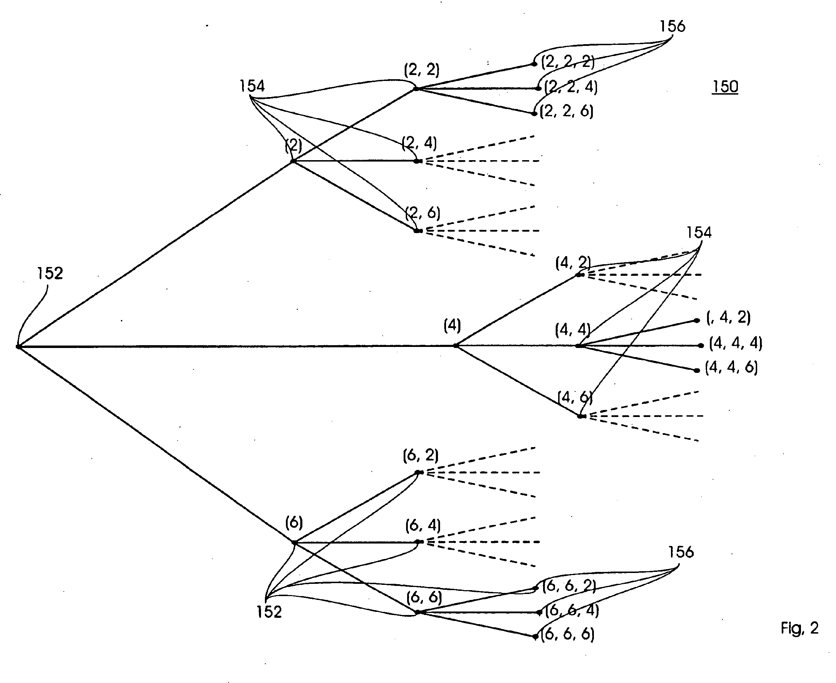

Um die Teilschritte 102-106 noch einmal bezüglich ihres Rechenaufwandes zu veranschaulichen, sei auf Fig. 2 Bezug genommen. Wie es oben bereits angedeutet worden ist, wird in den Schritten 102-106 die zu kodierende Framesequenz eben nicht einmal für jede mögliche Folge von Quantisierungsparameterwerten Qi aus q1, q2, ..., qM durchgeführt, wozu $M^N$-Durchläufe notwendig wären. Würden all diese Durchläufe durchgeführt werden, so erhielte man

$$\sum_{n=1}^{N} M^n$$

Datenpunkte bzw. R-D-Paare, nämlich ein Paar pro möglicher Kodierung jedes Frames n der N-Frames, wofür aufgrund der Abhängigkeit von den vorhergehend verwendeten Quantisierungsparameterwerten nicht nur M Möglichkeiten bestehen, sondern entsprechend mehr.

Alle diese theoretisch herleitbaren Datenpunkte können in einer Baumstruktur angeordnet werden, wie sie in Fig. 2 allgemein mit 150 angezeigt ist. Dabei gehen von der Wurzel 152 und jedem Verzweigungsknoten 154 jeweils M Zweige aus, wobei in Fig. 2 die Wurzel und die Verzweigungsknoten 152 bzw. 154 mit Punkten und die Zweige mit Linien zwischen den Punkten dargestellt sind. Die Baumstruktur 150 weist N Hierarchie- bzw. Baumstrukturebenen auf, wobei die Wurzel 152 beispielsweise die 0-te darstellt. Jedem der M Verzweigungen von der Wurzel 152 bzw. einem Verzweigungsknoten 154 ist ein unterschiedlicher der M Quantisierungsparameterwerte Qi zugeordnet, so dass auf diese Weise dem Verzweigungsknoten 154 und den Blättern 156 der Baumstruktur die oben erwähnten möglichen Datenpunkte zugeordnet werden können.

In Fig. 2 sind nun nicht alle möglichen Datenpunkte mit fettgedruckten Punkten in der Baumstruktur 150 markiert, sondern vielmehr lediglich diejenigen, die bei den Schritten 102-106 ermittelt werden. Verzweigungen, die zu Datenpunkten führen, die zwar möglicherweise ermittelt werden könnten in den Schritten 102-106 aber nicht ermittelt werden, sind in Fig. 2 mit gestrichelten Linien angezeigt. Fig. 2 stellt somit den vollständigen exponentiellen Suchbaum des obigen Beispiels mit N=3 und M=3 dar, wobei der Teilsatz der eigentlich gemessenen Daten mit fettgedruckten Punkten angezeigt ist. Aus dieser Darstellung geht ohne weiteres hervor, dass die Rechenkomplexität der Schritte 102-106 gegenüber der Rechenkomplexität zur Durchführung der Kodierung für alle möglichen Quantisierungsparameter folgen von $M^N$ auf $M^2$ reduziert ist.

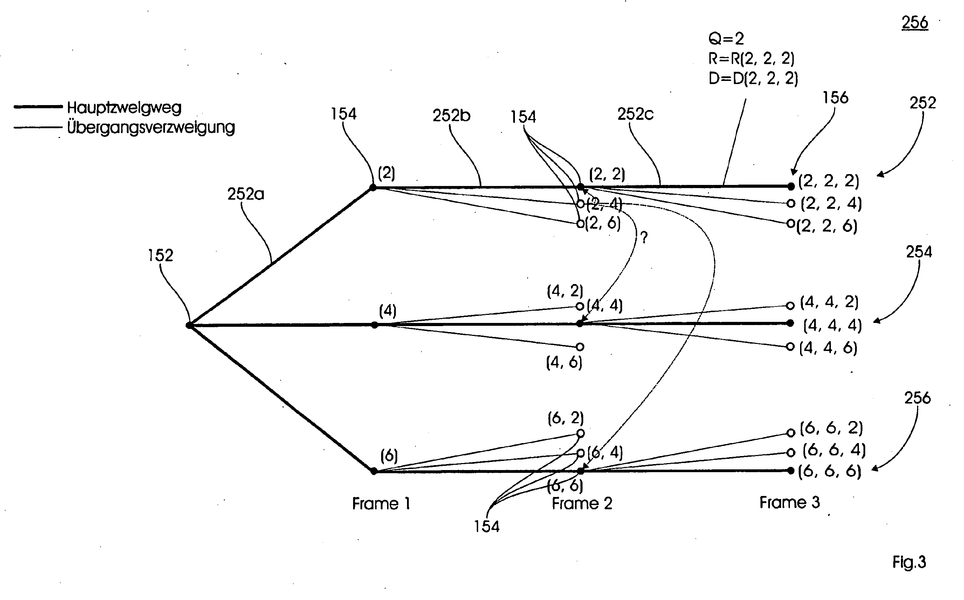

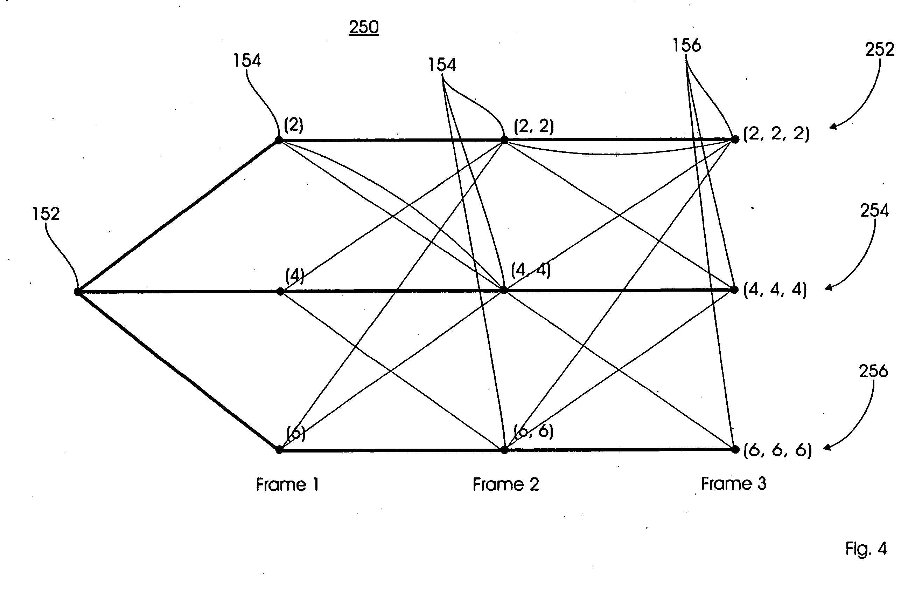

Wieder bezugnehmend auf Fig. 1 wird im folgenden der auf den Datensammelschritt 10 folgende Optimierungsschritt 20 näher beschrieben. Der Optimierungsschritt 20 besteht im wesentlichen aus zwei Teilschritten 202 und 204. In dem ersten Teilschritt 202 wird aus den gesammelten Datenpunkten bzw. D/R-Tupeln ein Zustandsübergangsdiagramm bzw. Gitternetz konstruiert. Dieser Teilschritt 202 wird im folgenden noch bezugnehmend auf die Fig. 3 und 4 näher erläutert werden. In dem zweiten Teilschritt 204 des Optimierungsschrittes 20 wird das erzeugte Zustandsübergangsdiagramm unter Verwendung des Viterbi-Algorithmus und einer Lagrange-Kostenfunktion durchsucht. Dieser Schritt umfasst eine Optimierungsoperation, wie sie beispielsweise aus den im vorhergehenden erwähnten Druckschriften von Ortega und Ramchandran beschrieben sind. Das Gitternetz bzw. das Zustandsübergangsdiagramm, das in schritt 202 aufgebaut wird, weist M Hauptzweige bzw. Hauptpfade auf, die den Kodierungen mit festem Quantisierungsparameter Q aus Schritt 102 entsprechen. Das Zustandsübergangsdiagramm wächst von der linken bis zur rechten Seite je mehr Frames kodiert werden, wobei die entsprechenden Zustände entlang eines Hauptzweiges mit (a,a,...,a) mit a ε {q1, q2, ..., qM} bezeichnet werden. Jede Verzweigung, die zwei Zustände des Zustandsübergangsdiagramm verbindet, ist gekennzeichnet durch den Quantisierungsparameterwert Q, der verwendet wird, um zu dem nächsten Zustand zu gelangen, und die resultierenden Werte für R und D für dieses Frame.

Die zusätzlichen Datenpunkte (a,a,....a,b) mit a≠b aus dem Schritt 106 werden dem Zustandsübergangsdiagramm ebenfalls hinzugefügt. Folglich führen von jedem Zustand auf einem Hauptzweig M-1 Übergangsverzweigungen weg von diesem Hauptzweig, um denselben zu verlassen. Das ist beispielsweise in Fig. 3 für das obige Beispiel von Fig. 2 mit N=3 und M=3 gezeigt, wobei explizit darauf hingewiesen wird, dass das in Fig. 2 dargestellte Zustandsübergangsdiagramm äquivalent zu demjenigen Teil der Baumstruktur aus Fig. 2 ist, der die aus den Schritten 102-106 erhaltenen Datenpunkte betrifft. Lediglich die Anordnung der Datenpunkte bzw. der Baumstruktur ist anders.

Der Aufbau der Baumstruktur aus Fig. 2 bzw. des entsprechenden Zustandsübergangsdiagramms aus Fig. 3 stellt, soweit er bisher beschrieben worden ist, ein inhärentes Ergebnis der Schritte 102-106 des Datensammelschrittes 10 dar. Dabei diente die Baumstrukturdarstellung in Fig. 2 lediglich der Veranschaulichung der Reduktion des Rechenaufwandes gemäß dem Verfahren von Fig. 1 gegenüber einem Optimierungsverfahren, nach welchem jede Quantisierungsparameterfolge "ausprobiert" wird. Fig. 3 beschränkt sich auf denjenigen Teil der Baumstruktur von Fig. 2, der die Datenpunkte betrifft, für die in dem Datensammelschritt 10 tatsächlich D-R-Daten erhalten worden sind. Fig. 3 stellt somit den Ausgangspunkt des Schrittes 202 zur Konstruktion des zu erzielenden Zustandsübergangsdiagramms dar. Wie es bereits erwähnt worden ist, besteht der Hauptunterschied zwischen Fig. 2 und Fig. 3 darin, dass die Anordnung der Datenpunkte 154-156 in Fig. 3 zu derjenigen aus Fig. 2 unterschiedlich ist. Bei dem Übergang von der Baumstrukturdarstellung aus Fig. 2 in das Zustandsübergangsdiagramm aus Fig. 3, das allgemein mit 250 angezeigt ist, besteht aber eine weitere Veränderung darin, dass die Zuordnung der D-R-Daten nicht mehr derart stattfindet, dass dieselben den Knoten 154 bzw. Blättern 156 zugeordnet werden, die in dem Fall des Zustandsübergangsdiagramms 250 als Zustände bezeichnet werden, sondern diese Informationen zusammen mit dem der Verzweigung in dem Baumstrukturdiagramm zugeordneten von einem Zustand zu einem anderen zugeordneten Quantisierungsparameterwert Q der Verzweigung in dem Zustandsübergangsdiagramm zugeordnet werden, die zu dem jeweiligen Zustand führt. Dies wird im folgenden noch detaillierter erörtert werden. Der Grund dafür besteht darin, dass es das Ziel der Konstruktion des schließlichen Zustandesübergangsdiagramms ist, die unvollständigen Pfade in der Baumstruktur aus Fig. 2 an ihren Endpunkten wieder auf irgendeinen der Hauptzweige zurückzuführen, um dabei zu ermöglichen, dass ein anschließender, in Schritt 204 verwendeter Such-Algorithmus bei der Optimierung der Quantisierungsparameter bei Variationen eines Quantisierungsparameters wieder auf einen der Hauptzweige gerät, wo er wieder Informationen über D-R-Daten erhält. Wie dies durchgeführt wird, wird im folgenden beschrieben.

In Fig. 3 sind die Hauptzweige durch dicke Linien zwischen den Zuständen 152-156 dargestellt. Ein erster Hauptzweig 252 ist dem Quantisierungsparameter 2 zugeordnet und führt von der Wurzel bzw. dem Anfangszustand 152 über zwei Verzweigungsknoten bzw. Zwischenzustände 154 zu einem Blatt bzw. Endzustand 156, wobei die Zwischenzustände 154 und der Endzustand 156 auf dem Hauptzweig 252 den Kodierungen der drei Frames entsprechen. Der Hauptzweig 252 setzt sich dabei aus drei Hauptverzweigungen 252a, 252b und 252c zusammen, die die einzelne Zustände 152-156 entlang des Hauptzweiges 252 von dem Anfangszustand 152 bis zu dem Endzustand 156 miteinander verbinden, um von dem Anfangszustand 152 zu dem Endzustand 156 zu führen. Wie es in Fig. 3 dabei für die Hauptverzweigung 252c angezeigt ist, ist jeder Hauptverzweigung der feste Quantisierungsparameterwert, nämlich Q=2, sowie das D-R-Paar zugeordnet, zu dem die Quantisierung mit diesem Quantisierungsparameter führt, d.h. (2,2,2). Dementsprechend führt von dem Anfangszustand 152 auch ein Hauptzweig 254 und ein Hauptzweig 256 weg, die den Quantisierungsparameterwert 4 bzw. 6 zugeordnet sind und ebenfalls über drei Hauptverzweigungen und über zwei Zwischenzustände zu einem Endzustand 156 führen, wobei diese Zustände wieder den N=3 Frames entsprechen.

Die Übergangsverzweigungen, die von den Hauptpfaden 252-256 weg führen, sind in Fig. 3 mit dünnen Linien dargestellt. Ihre Endzustände sind mit nicht ausgefüllten Kreisen 154 bzw. 156 dargestellt, wie es aus Fig. 2 ersichtlich ist, sind alle Übergangsverzweigungen "Sackgassen", d.h. Verzweigungen, die von einem Zustand 154 entlang eines Hauptzweiges 252-256 zu einem Endzustand führen, von dem aus keine weitere Verzweigung zu einem Zustand der nächsthöheren Ebene führt, die dem nächsten Frame zugeordnet ist. Anders ausgedrückt sind diese Endzustände nicht mit irgendeinem anderen Zustand verbunden. Folglich ist das bisherige Zustandsübergangsdiagramm bzw. Gitternetz in seiner augenblicklichen Form, wie sie aus den Schritten 102-106 inhärent erhalten wird, noch nicht für eine Verwendung zur Optimierung geeignet, da eine Änderung des Quantisierungsparameterwertes noch nicht möglich ist. Ziel des Schrittes 202 besteht deshalb, wie im vorhergehenden bereits erwähnt und im folgenden beschrieben, darin, diese Endzustände wieder auf Zustände auf den Hauptzweigen 252-256 zurückzuführen.

Um dabei die dem Schritt 202 zugrundeliegende Idee zu veranschaulichen, wird an dieser Stelle eine Hauptannahme erläutert, die dem Schritt 202 dabei zugrunde liegt. Diese Hauptannahme ermöglicht den Ausbau eines genäherten Zustandübergangsdiagramms. Insbesondere wird angenommen, dass die R-D-Eigenschaft zukünftiger Frames nicht zu sehr von der exakten Sequenz der Kodierung bzw. den für die Kodierung vorhergehender Frames verwendeten Quantisierungsparameterwerten abhängt, sondern hauptsächlich von der Qualität oder der Verzerrung des zuvor rekonstruierten Referenz-Frames. In anderen Worten ausgedrückt wird angenommen, dass, wenn zwei unterschiedliche Kodierungspfade in dem Zustandsübergangsdiagramm von Fig. 3 in einem ähnlichen D resultieren, und zwar insbesondere zwei unterschiedliche Kodierungspfade, die in derselben Eben bzw. bei demselben Frame enden, d.h. für die gilt $D(Q1, Q2, ..., Qn) \approx 0(Q1',Q2',...,Qn')$, das R-D-Verhalten bei den folgenden Frames mit k>n ebenfalls ähnlich sein wird. Es wird darauf hingewiesen, dass obwohl diese Annahme intuitiv gerechtfertigt erscheint, die Annahme natürlich nicht im allgemeinen zutreffen muss. Nichtsdestotrotz wird die Annahme meistens bestätigt. Wenn in der vorliegenden Anmeldung deshalb an manchen Stellen von einer optimalen Auswahl oder einer Optimierung die Rede ist, dann ist darunter die Bedeutung von "optimal" unter der soeben erläuterten Annahme zu verstehen.

Basierend auf dieser soeben erläuterten Ähnlich-Verzerrrung-Annahme, werden in dem Schritt 202 Zustände mit ähnlicher Verzerrung miteinander verschmolzen, um ein verbundenes Zustandsübergangsdiagramm zu erhalten. Dazu wird insbesondere in einem ersten Teilschritt des Verschmelzungsschrittes 202, nämlich dem Teilschritt 202a, ein ermittelter Wert für D einer zu einem Endzustand führenden Übergangsverzweigung also eines Sackgassenendes mit den D-Werten der entsprechenden Frames verglichen, wie sie aus der Kodierung mit festen Quantisierungsparameterwerten erhalten worden sind, und wie sie den Hauptverzweigungen zugeordnet sind, die an einem Zustand auf einem der Hauptzweige 252-256 enden, die in der gleichen Ebene wie die jeweilige Endzustand liegen. Abhängig von diesem Vergleich wird dann in einem darauffolgenden Teilschritt 202b diese Übergangsverzweigung umgeleitet, um an einem Zustand auf einem der Hauptzweige 252-256 zu enden, der in der gleichen Baumebene liegt bzw. das gleiche Frame betrifft, zu dem eine Hauptverzweigung 252b führt, der ein D-Wert zugeordnet ist, der dem D-Wert der entsprechenden Übergangsverzweigung am nächsten ist. Dies ist in Fig. 3 mit gestrichelten Linien und einem Fragezeichen exemplarisch für eine Übergangsverzweigung angedeutet, die von dem Frame-1-Zustand auf dem Hauptzweig 252 zu dem Endzustand (2,6) führt, und der dementsprechend der Quantisierungsparameter Q=6 sowie der D-Wert D=D(2,6) zugeordnet ist. Wie bereits beschrieben, werden die Zustände aus den Hauptzweigen 252-256 als Referenzpunkte verwendet, wobei die Übergangsverzweigungen, die die Hauptzweige verlassen, mit dem nächstliegenden Zustand auf einem der Hauptzweige verschmolzen werden - unter Verwendung der Verzerrung als dem Ähnlichkeitsmaß. Bezogen auf den in Fig. 3 exemplarisch hervorgehobenen Fall der Übergangsverzweigung, der auf den Endzustand (2,6) zeigt, bedeutet dies, daß D(2,6) mit D(2,2), D(4,4) und D(6,6) verglichen wird (202a), wobei der nächstliegende Wert bestimmt wird (202b) und dieser nächstliegende Wert angibt, wohin die zu dem Zustand (2,6) führende Übergangsverzweigung hin umverlegt werden soll, bzw. mit welchen der Zustände auf den Hauptzweigen 252-256 der gleichen Frame-Ebene, auf die die gestrichelten Pfeile in Fig. 3 zeigen, der Endzustand (2,6) verschmolzen werden soll. Diese Verschmelzungsoperation 202 wird für jede Übergangsverzweigung wiederholt.

Das Ergebnis des Schrittes 202a und 202b für das Beispiel von Fig. 3 ist in Fig. 4 gezeigt. Fig. 4 zeigt also das konstruierte Zustandsübergangsdiagramm nach dem Umleiten der Übergangsverzweigungen auf Zustände auf den Hauptzweigen. Es wird explizit noch einmal darauf hingewiesen, dass anders als bei der Baumstrukturdarstellung von Fig. 2 ein Paar von Zuständen tatsächlich durch mehr als eine Verzweigung miteinander verbunden sein kann. Diese Verzweigungen entsprechen unterschiedlich zugeordneten Quantisierungsparameterwerten und weisen auch unterschiedliche zugeordnete R-D-Werte auf. Allgemein ist die Struktur des Zustandsübergangsdiagramms signalabhängig und irregulär. Jede Verzweigung weist, wie oben bereits erwähnt, einen zugeordneten Q-, R- und D-Wert auf.

Ferner wird bezugnehmend auf das in Fig. 4 gezeigte fertig konstruierte Zustandsübergangsdiagramm darauf hingewiesen, dass es möglich ist, von dem Anfangszustand 152 aus Verzweigungen, d.h. Haupt- oder Übergangsverzweigung, nacheinander derart auszuwählen, dass die diesen Verzweigungen zugeordneten Quantisierungsparameterwerte Q jede der $M^N$ möglichen Folgen von Quantisierungsparameterwerten ergibt. Anders ausgedrückt ermöglicht das Zustandsübergangsdiagramm von Fig. 4 die Auswahl zwischen $M^N$ unterschiedlichen Pfaden von dem Anfangszustand 152 zu einem der Endzustände 156, die alle einer vollständigen Kodierung der zu kodierenden Framesequenz mit unterschiedlichen Quantisierungsparameterfolgen entsprechen. Eine Summe die den dabei verwendeten Übergängen zugeordneten D- bzw. R-Werte ergibt dabei zudem eine Schätzung der Verzerrung und Rate der Kodierung der gesamten Framesequenz mittels der entsprechenden Q-Folge.

In dem Schritt 204 findet nun der eigentliche Optimierungsschritt statt. Bei diesem Optimierungsschritt wird beispielsweise ein Viterbi-Algorithmus verwendet, um den optimalen Pfad durch das aufgebaute Zustandsübergangsdiagramm zu finden. Als ein Optimierungskriterium können die akkumulierten Lagrange-Kosten bis zum Frame i verwendet werden. Es wird dabei darauf hingewiesen, dass der Viterbi-Algorithmus mit einem vorbestimmten Lagrange-Faktor λ betrieben werden muss. Folglich muss, falls eine bestimmte Raten-Beschränkung $R_{max}$ unter Verwendung einer konvexeneinhüllenden-Suche für den geeigneten Wert von λ erzielt werden soll, der Viterbi-Algorithmus mehrfach angewendet werden muss. Verglichen zu dem Datensammelschritt führt dies jedoch lediglich zu einer geringen Rechenkomplexitätserhöhung. Nach dem Auffinden des minimalen J wird eine Rückverfolgung verwendet, um den optimalen Pfad zu finden, d.h. die Folge von Quantisierungsparametern Qi*.

In dem letzten Schritt 30 wird dann, falls erwünscht, wie im vorhergehenden erwähnt, die Framesequenz unter Verwendung der optimalen Folge von Quantisierungsparameterwerten Qi* kodiert, wobei darauf hingewiesen wird, dass, da ja das Zustandsübergangsdiagramm das Ergebnis einer Schätzung war, wie es im vorhergehenden beschrieben worden ist, die tatsächliche Verzerrung und die tatsächliche Komprimierungsrate der kodierten Framesequenz anders sein kann, als dies beispielsweise aus dem Minimum der Lagrange-Kostenfunktion zu erwarten wäre.

Bevor im folgenden auf mögliche Alternativen zu der im vorhergehenden beschriebenen Vorgehensweise eingegangen wird, wird im folgenden noch auf mögliche Implementierungs- bzw. Anwendungsmöglichkeiten eingegangen. Insbesondere wird zunächst darauf hingewiesen, dass, obwohl im vorhergehenden lediglich das Verfahren zur Bestimmung einer optimalen Quantisierungsparameterfolge beschrieben worden ist, dieses Verfahren natürlich ohne weiteres in einer Vorrichtung implementierbar ist, wie z.B. in einem ASIC-, einem FPGA oder dergleichen. Zudem können die in Fig. 1 dargestellten Blöcke beispielsweise als Teilschaltungen einer integrierten Schaltung implementiert sein, die zur Ausführung der dort beschriebenen Schritte fähig bzw. ausgebildet sind. Ferner ist es möglich, das im vorhergehenden beschriebene Verfahren als Computerprogramm auszuführen, das Unterprogramm-Routinen aufweist, die zur Ausführung der einzelnen Schritte von Fig. 1 ausgebildet sind. Insofern stellt Fig. 1 folglich auch eine entsprechende Vorrichtung zur Bestimmung einer optimalen Folge von Quantisierungsparameterwerten bzw. der Kodierung einer Framesequenz unter Optimierung der Quantisierungsparameter dar.

Ferner kann der obige RDM-Algorithmus auf jedes hybride Videokodierungsschema angewendet werden. Implementierungsergebnisse wurden insbesondere durch Verwendung des MPEG-4 Simple Profile (SP) erhalten, wobei diese Implementierungsergebnisse im folgenden beschrieben werden.

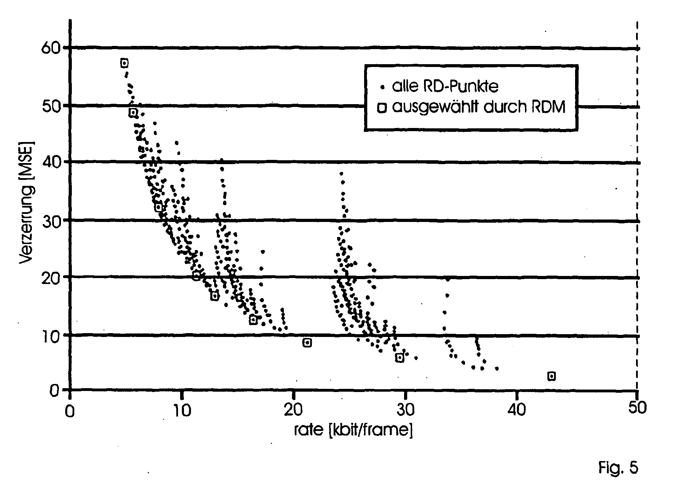

In einem ersten Experiment wurden die ersten N=3 Frames der Foreman-Sequenz (QCIF, 15 fps) verwendet, wobei M=8 Quantisierungsparameterwerte für jedes Frame zugelassen wurden. Für dieses begrenzte Beispiel ist es immer noch möglich, alle $M^N=512$ Kombinationen zu kodieren, die als R-D-Punkte in Fig. 5 veranschaulicht sind, wobei in Fig. 5 entlang der horizontalen Achse die Komprimierungsrate in kBit pro Frame und entlang der vertikalen Achse die Verzerrung (Distortion) als mittleres Fehlerquadrat angegeben ist. Von den 512 Punkten sind einige mit einem Kästchen umrahmt. Diese Punkte wurden durch den RDM-Algorithmus von Fig. 1 unter Verwendung von MPEG-4 SP für verschiedene Werte von λ ausgewählt. Wie es ersichtlich ist, liegen die ausgewählten Punkte nahe der konvexen Einhüllenden des Datensatzes und folglich auch nahe den optimalen Lösungen.

In einem zweiten Experiment wurden vier Standardtest-Sequenzen (Foreman, Paris, Football, Tempete) und drei zusätzliche Sequenzen (CNN, Spiderman, Red-October) in QCIF-Auflösung bei 15 fps bzw. Frames pro Sekunde kodiert. Die drei zusätzlichen Sequenzen umfassen Szenenschnitte und Szenen mit unterschiedlicher Komplexität, wo mehrfach Durchlauf-Algorithmen ihre eigentliche Stärke zeigen können. Verwendet wurde der Fraunhofer-IIS-MPEG-4-SP-Videocodec für die Kodierung, der ebenfalls in MPEG-4 und 3GPP als der Baseline-Codec zur Auswertung verwendet wird, wobei auf MPEG Doc. N6231, "Report of the Formal Verification Tests on AVC", Waikoloa, Dez. 2003 und 3GPP Doc. S4-030718, "Test Material and Reference Results for Video Codec Candidate Qualification Criteria", Tampere, Nov. 2003 verwiesen wird. Dieser Codec bzw. dieses Kodierungsschema verwendet eine R-D-OptimierungsmodusEntscheidung und zeigt eine gute R-D-Leistungsfähigkeit, wobei bezüglich weiterer Einzelheiten auf http://www.iis.fraunhofer.de/amm/download/wp_iismpeg4videos oftware.pdf verwiesen wird.

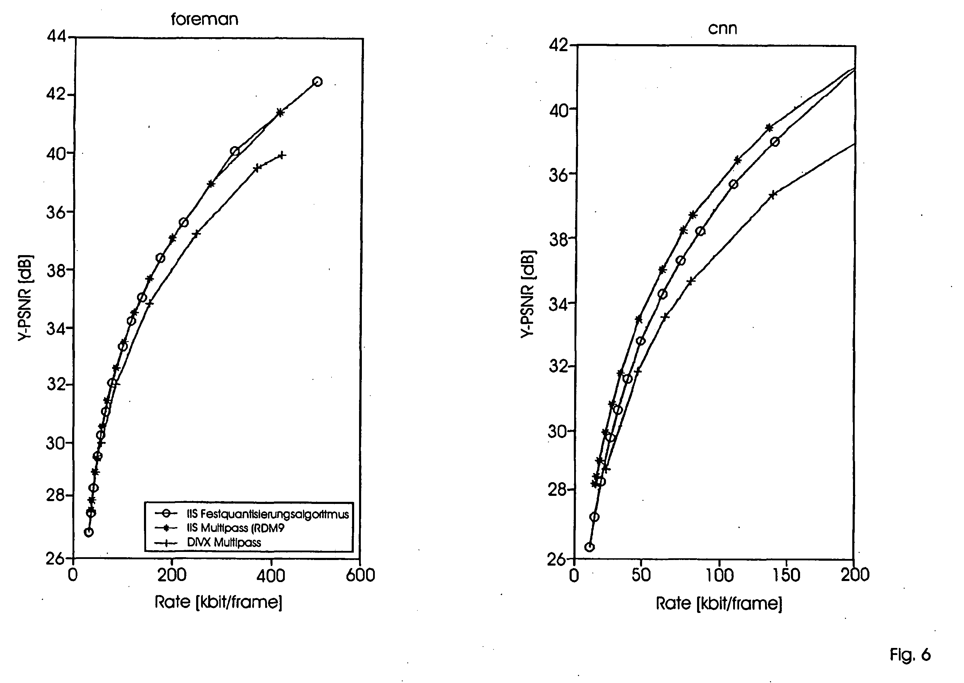

Für Sequenzen mit Szenenschnitten und in der Zeit variierender Komplexität kann die Mehrfachdurchlauf-Kodierung ihre Nützlichkeit beweisen. Eine solche Sequenz ist die CNN-Sequenz, bei der mit dem RDM-Algorithmus eine durchschnittliche PSNR-Verbesserung von 0,74 dB erzielt werden kann, wie es in dem rechten Graphen von Fig. 6 ersichtlich ist, auf dessen horizontalen Achse die Komprimierungsrate in kBit, und in dessen vertikaler Achse der durchschnittliche Luminanz-PSMR-Wert in dB angegeben ist. Insbesondere zeigt der rechte Graph von Fig. 6 für die CNN-Sequenz drei D-R-Kurven, wie sie aus Messungen unter Verwendung des RDM-Algorithmus (*), des oben erwähnten Videocodec der Fraunhofer mit festem Quantisierungsparameterwert (0) und mit einem Vergleichsmehrfachdurchlauf-Algorithmus, nämlich DivX-Codec (+), erhalten worden sind. Dabei wird darauf hingewiesen, dass die subjektive Qualität durch Verwendung des oben vorgestellten RDM-Algorithmus häufig mehr verbessert wird, als dies durch die PSNR-Verstärkungen angezeigt wird. Insbesondere während Szenenschnitten und Schwenks liefert der RDM-Algorithmus eine verbesserte subjektive Qualität durch ein intelligenteres Aufwenden von Bits, d.h. nämlich dort, wo dieselben nützlich für den zukünftigen Kodierungsprozess sind. Folglich wurde herausgefunden, dass das Minimieren des mittleren Fehlerquadrats über die gesamte Sequenz einen positiven Effekt auf die subjektive Qualität hat.

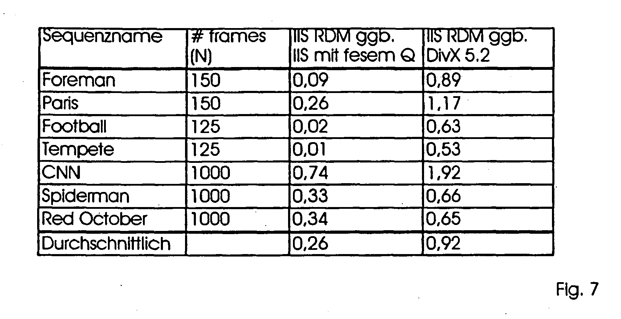

Fig. 6 vergleicht, wie bereits erwähnt, die RDM-Ergebnisse (*) mit den Ergebnissen wie sie durch den DivX 5.2-Codec (+) erhalten worden sind. Dabei wird darauf hingewiesen, dass beide Codec auf gleiche Kodierwerkzeuge zurückgreifen und insbesondere mit demselben MPEG-4-SP-konformen Decoder kodiert werden können. Darüber hinaus verwenden beide Kodierer Mehrfachdurchlauf-Kodierung und R-D-Optimierungsmodusentscheidung. Der durchschnittliche PSNR-Gewinn liegt bei 0,89 dB und 1,92 dB für die Foreman- und CNN-Sequenz, wobei der Vergleich bezüglich der Foreman-Sequenz in dem linken Graphen von Fig. 6 dargestellt ist. Weitere Ergebnisse für alle oben genannten Test-Sequenzen sind in der in Fig. 7 gezeigten Tabelle zusammengefasst. Der typische Gewinn für Sequenzen mit einer Zeitveränderlichen Komplexität, d.h. die obigen Sequenzen CNN, Spiderman, Red-October, beträgt 0,47 dB.

Es wird noch darauf hingewiesen, dass der DivX-Codec nicht unbedingt nur mit dem mittleren quadratischen Fehler als dem einzigen Optimierüngskriterium arbeitet. Folglich muss der hier präsentierte Vergleich mit Vorsicht behandelt werden. Es wurde jedoch herausgefunden, dass hohe PSNR-Gewinne sehr gut mit subjektiver Qualität korrelieren. Folglich nehmen die Erfinder der vorliegenden Erfindung an, dass ein PSNR-Wert sehr gut als ein objektives Qualitätsmaß verwendbar ist, solange es im Zusammenhang mit demselben Kodierschema und derselben Sequenz verwendet wird, welches Bedingungen sind, die im vorliegenden Fall zutreffen.

Das vorhergehende Ausführungsbeispiel liefert folglich einen RDM-Algorithmus für die Videokodierung, das ein verbessertes R-D-Verhalten durch Mehrfachdurchlauf-Kodierung liefert. Dieser RDM-Algorithmus konvertiert den exponentiellen Suchbaum in ein lineares Zustandsübergangsdiagramm, das eine R-D-Optimierung erst ermöglicht. Dies wird durch Bündeln von Zuständen mit ähnlicher Verzerrung erzielt - die Annahme ausnutzend, dass für zukünftige Frames ein ähnliches R-D-Verhalten resultieren wird. Die Anwendung des RDM-Algorithmus auf MPEG-4 SP zeigt einen typischen durchschnittlichen PSNR-Gewinn von 0,3 dB und verglichen zu DivX 5.2 einen Gewinn von bis zu 2 dB.

Daneben wird darauf hingewiesen, dass das oben vorgestellte RDM-Verfahren natürlich auch auf den H. 264/AVC-Standard anwendbar wäre, indem die oben erläuterte Ähnliche-Verzerrung-Annahme auf die Verwendung einer Mehrframe-Bewegungskompensation erweitert wird.

Noch in anderen Worten ausgedrückt wurde im vorhergehenden ein Komprimierungsrate-Verzerrung-Mehrfachdurchlauf-Videokodierungs-Verfahren beschrieben, das beispielsweise auf MPEG-4 anwendbar ist und das Problem der abhängigen Quantisierung in einem hybriden Kodierungsschema durch Konstruieren bzw. Aufbauen eines Zustandsübergangsdiagramms aus dem exponentiell anwachsenden Suchbau adressiert, dass dann unter Verwendung beispielsweise einer Lagrange- , Kostenfunktion durchsucht wird. Um das exponentielle Wachstum zu vermeiden, wurden Zustände mit ähnlich verzerrten Referenzframes basierend auf der Annahme zusammengelegt bzw. vereinigt, dass ein ähnliches Komprimierungsrate-Verzerrung-Verhalten für zukünftige Frames resultieren wird. Dabei wurde das Ziel im wesentlichen erreicht, einen optimalen Satz von Quantisierungsparameterwerten, einen für jedes Frame, auszuwählen, derart, dass das Gesamt-Komprimierungsraten-Verzerrungs-Verhalten optimiert ist.

In Bezug auf die vorhergehende Beschreibung wird noch darauf hingewiesen, dass das im vorgehenden beschriebene Ausführungsbeispiel für eine Bestimmung von Quantisierungsparameterwerten natürlich in mehrfacher Hinsicht variiert werden kann und verallgemeinerbar ist. Die vorliegende Erfindung ist beispielsweise nicht auf die Bestimmung einer optimalen Folge von Quantisierungsparameterwerten beschränkt. Vielmehr können auch andere Kodierungsparameter eines hybriden Kodierschemas gemäß der vorliegenden Erfindung bestimmt werden, wie z.B. solche, die im Zusammenhang mit der Kodierung der Prädiktionsfehler der bewegungskompensierten Prädiktion stehen und Einfluss auf Verzerrung und Komprimierungsrate haben. Dies könnte beispielsweise ein Parameter sein, der eine Transformationsgenauigkeit einer innerhalb der soeben genannten Kodierung stattfindenden Zeit-Frequenz-Transformation einstellt.

Dementsprechend ist es auch nicht unbedingt zwingend erforderlich, dass die Kodierungen in dem Schritt 1 oder 2 mit einem festen Kodierungsparameter durchgeführt werden. Die dort durchgeführten vollständigen Kodierungen könnten vielmehr auch mit Folgen von Kodierungsparameterwerten durchgeführt werden, bei denen der Kodierungsparameterwert frameweise variiert, und die zueinander unterschiedlich sind.

Bei dem Schritt 106 wurde im vorhergehenden der Kodierungsparameter, nämlich der Quantisierungsparameter, immer bei jedem Frame während der vollständigen Kodierungen in dem Schritt 102 variiert, um D- und R-Werte für die anderen Kodierungsparameter zu erhalten. Die vorliegende Erfindung ist aber auch bei einer Vorgehensweise vorteilhaft, wenn in dem Schritt 102 vollständige Kodierungen mit unterschiedlichen Stützfolgen von Kodierungsparameterwerten durchgeführt werden und im Schritt 106 D/R-Paare für andere Folgen von Parameterwerten ermittelt werden, die jedoch nur einen ersten Teil der Framesequenz betreffen. Insbesondere könnte folglich die Vorgehensweise nach Fig. 1 dahingehend verändert werden, dass von den Hauptpfaden bzw. Hauptzweigen abzweigend die Variation des Kodierungsparameters für die nächsten zwei Frames durchgeführt und die entsprechenden sich ergebenden D- und R-Werte ermittelt werden. Die Rückführung auf die Hauptzweige würde dann wie beschrieben durchgeführt werden.

Ferner wurde bei dem Schritt 202 im vorhergehenden ein Zustandsübergangsdiagramm aufgebaut, nach welchem ausgehend von einem Anfangszustand durch Zustandsübergänge der optimale Satz von Kodierungsparameterwerten ermittelt werden konnte. Andere Darstellungsmöglichkeiten bestehen jedoch ebenfalls. Es wäre möglich, die Ergebnisse der Schritte 202a und 202b in die Baumstrukturdarstellung von 202 zu übertragen, indem dort die Zuordnungsergebnisse aus Schritt 202b dazu verwendet werden, geschätzte Datenwerte in bis dahin noch fehlende Teile der Baumstrukturdarstellung einzutragen, so dass im Anschluss an den Schritt 202 eine vollständige Baumstrukturdarstellung entsteht.

Ferner wird bezugnehmend auf den Schritt 204 darauf hingewiesen, dass die Bestimmung der Folge von Kodierparameterwerten natürlich mit Hilfe anderer Algorithmen als dem Viterbi-Algorithmus durchgeführt werden kann. Auch die Kostenfunktion könnte anders gewählt werden und die Optimierungssumme nach anderen Gesichtspunkten durchgeführt werden. Effektiv müsste bei Schritt 204 auch keine Optimierung durchgeführt werden, wenn gegebenenfalls das Ausfindigmachen einer nach vorbestimmten Kriterien ausreichenden Kodierung für eine bestimmte Anwendung ausreichend ist.

Schließlich wird darauf hingewiesen, dass wie im vorhergehenden erwähnt, der Schritt 30 auch weggelassen werden könnte, so dass die Ausgabe des Verfahrens bzw. der entsprechenden Vorrichtung lediglich in der Ausgabe der bestimmten Folge von Kodierungsparameterwerten bestünde.

Insbesondere wird darauf hingewiesen, dass abhängig von den Gegebenheiten das erfindungsgemäße Schema auch in Software implementiert sein kann, wie es ja auch im vorhergehenden beschrieben worden ist. Die Implementation kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt kann die Erfindung somit als ein Computerprogramm mit einem Programmcode zur Durchführung des Verfahrens realisiert werden, wenn das Computerprogramm auf einem Computer abläuft.

**Patentansprüche**

1. Vorrichtung zum Bestimmen einer Folge von Werten für einen Kodierungsparameter eines hybriden Kodierschemas, die für jedes von N Frames einer Framesequenz einen Wert aufweist, der aus einem vorbestimmten Satz von M vorbestimmten Werten für den Kodierungsparameter ausgewählt ist, aus $M^N$ möglichen Folgen, zur Verwendung für eine Kodierung der Framesequenz mittels des hybriden Kodierschemas, mit
einer Datenermittlungseinrichtung (10) zum, unter Verwendung des hybriden Kodierungsschemas, Ermitteln von sich ergebenden Verzerrungen und Kompressionsraten für die Frames der Framesequenz für den Fall der vollständigen Kodierung der Framesequenz mit unterschiedlichen Stützfolgen von Werten für den Kodierungsparameter aus den $M^N$ möglichen Folgen, wobei die Stützfolgen zur Kodierung für jedes Frame der Framesequenz einen Wert aus dem vorbestimmten Satz von M vorbestimmten Werten aufweisen, und für den Fall der Kodierung einer echten Teilsequenz der Framesequenz, die sich von einem ersten Frame der Framesequenz aus bis zu einem vorbestimmten Frame der Framesequenz erstreckt, mit Fragmentfolgen von Werten für den Kodierungsparameter, die zur Kodierung für jedes Frame von dem ersten Frame der Framesequenz bis zu dem vorbestimmten Frame der Framesequenz jeweils die gleichen Werte wie eine der Stützfolgen aber für das vorbestimmte Frame einen zu der einen Stützfolge unterschiedlichen Wert aufweisen, derart, dass eine echte Teilmenge der Menge von Verzerrungen und Kompressionsraten erhalten wird, wie sie durch Kodierung mittels aller möglichen Folgen der vorbestimmten Werte für den Kodierungsparameter für jedes Frame erhaltbar ist;
eine Datenschätzeinrichtung (202) zum Ermitteln geschätzter Verzerrungen und Kompressionsraten für Frames der Framesequenz, die auf das vorbestimmte Frame folgen, unter Zuordnung einer Fragmentfolge zu derjenigen der Stützfolgen, unter Verwendung von welcher eine für das vorbestimmte Frame erhaltene Verzerrung zu einer unter Verwendung der Fragmentfolge für das vorbestimmte Frame erhaltene Verzerrung einen möglichst geringen Unterschied aufweist; und
einer Bestimmungseinrichtung (204) zum, basierend auf den ermittelten sich ergebenden und geschätzten Verzerrungen und Kompressionsraten, Bestimmen der Folge von Werten für den Kodierungsparameter des hybriden Kodierschemas.

2. Vorrichtung gemäß Anspruch 1, bei der die Datenermittlungseinrichtung (10) folgende Merkmale aufweist:

   eine Kodierungseinrichtung (102) zum, mittels des hybriden Kodierungsschemas, Kodieren der Framesequenz unter Verwendung der unterschiedlichen Stützfolgen von Werten für den Kodierungsparameter für jedes Frame der Framesequenz, um eine Sequenz von kodierten Frames für jede Stützfolge zu erhalten;
   eine Bestimmungseinrichtung (104) zum Bestimmen der Verzerrung und der Kompressionsrate für jedes kodierte Frame jeder Sequenz von kodierten Frames, die für eine der Stützfolgen erhalten wird, so dass jeder Stützfolge die Verzerrung und die Kompressionsrate der kodierten Frames der Sequenz von kodierten Frames zugeordnet ist, die für die jeweilige Stützfolge erhalten wird; und
   eine Ermittlungseinrichtung (106) zum Ermitteln der Verzerrung und der Kompressionsrate von kodierten Frames einer Anfangssequenz von kodierten Frames, wie sie durch Kodieren der echten Teilsequenz von Frames der Framesequenz von dem ersten Frame bis zu dem vorbestimmten Frame der Framesequenz mittels des hybriden Kodierschemas unter Verwendung einer vorbestimmten der Fragmentfolgen von Werten für den Kodierungsparameter für jedes Frame der Teilsequenz erhalten wird, die sich von einer Teilfolge jeder Stützfolge, die sich auf das erste bis vorbestimmte Frame bezieht, unterscheidet.

3. Vorrichtung gemäß Anspruch 2, bei der die Datenschätzeinrichtung (202) folgende Merkmale aufweist:

   eine Vergleichseinrichtung (202a) zum Vergleichen der durch die Ermittlungseinrichtung ermittelten Verzerrung des letzten kodierten Frames der Anfangssequenz von kodierten Frames mit der Verzerrung für das entsprechende kodierte Frame der Sequenz von kodierten Frames, die für die Stützfolgen erhalten werden, um ein Vergleichsergebnis zu erhalten; und
   eine Zuordnungseinrichtung (202b) zum, basierend auf dem Vergleichsergebnis, Zuordnen der Fragmentfolge zu einer der Stützfolgen, um eine geschätzte Stützfolge von Werten für den Kodierungsparameter zu erhalten, die sich aus der Fragmentfolge ergänzt um einen Teil der der Fragmentfolge zugeordneten Stützfolge zusammensetzt, der den Frames nach dem vorbestimmten Frame der Framesequenz zugeordnet ist, und der die durch die Ermittlungseinrichtung ermittelten Verzerrungen und Kompressionsraten der Anfangssequenz und die bestimmten Verzerrungen und Kodierungsraten der den auf das vorbestimmte Frame folgenden Frames entsprechenden kodierten Frames der Sequenz von kodierten Frames zugeordnet sind, die für die Stützfolge erhalten wird, die der vorbestimmten Fragmentfolge zugeordnet ist.

4. Vorrichtung gemäß Anspruch 3, bei der die Bestimmungseinrichtung (30) folgendes Merkmal aufweist:

eine Auswahleinrichtung (204) zum Auswählen der Folge von Werten für den Kodierungsparameter aus einer Menge, die die Stützfolgen und die geschätzte Stützfolge umfasst, abhängig von den jeweils zugeordneten Verzerrungen und Kompressionsraten.

5. Vorrichtung gemäß Anspruch 4, wobei die Kodiereinrichtung (102) ausgebildet ist, um die Kodierung der Framesequenz unter Verwendung von Stützfolgen durchzuführen, die für jedes Frame konstant einen unterschiedlichen vorbestimmten Wert aus dem vorbestimmten Satz aufweisen.

6. Vorrichtung gemäß Anspruch 4 oder 5, wobei die Ermittlungseinrichtung (106) ausgebildet ist, um die Verzerrung und die Kompressionsrate von kodierten Frames einer Anfangssequenz von kodierten Frames zu ermitteln, wie sie durch Kodieren der echten Teilsequenz mittels des hybriden Kodierschemas unter Verwendung einer Fragmentfolge erhalten wird, die sich von der Teilfolge einer vorbestimmten Stützfolge, die sich auf das erste bis vorbestimmte Frame bezieht, nur durch Ersetzen des letzten Wertes dieser Teilfolge durch einen anderen Wert aus dem vorbestimmten Satz unterscheidet.

7. Vorrichtung gemäß Anspruch 6, wobei die Ermittlungseinrichtung ausgebildet ist, um bei der Ermittlung der Verzerrung und der Kompressionsrate des letzten kodierten Frames der Anfangssequenz von kodierten Frames ein Zwischenergebnis der Kodierung der Framesequenz durch die Kodierungseinrichtung (102) mittels des hybriden Kodierungsschemas unter Verwendung der vorbestimmten Stützfolge, das einen Rest zu einer bewegungskompensierten Prädiktion des vorbestimmten Frames darstellt, zu verwenden, um mittels des hybriden Kodierungsschemas die Kodierung des vorbestimmten Frames unter Verwendung des anderen Werts für den Kodierungsparameter fortzusetzen.

8. Vorrichtung gemäß Anspruch 6 oder 7, bei der die Ermittlungseinrichtung (106), die Vergleichseinrichtung (202a) und die Zuordnungseinrichtung (202b) ausgebildet sind, um die Ermittlung, den Vergleich und die Zuordnung für eine Mehrzahl der Frames für eine Mehrzahl der vorbestimmten Stützfolgen zu wiederholen.

9. Vorrichtung gemäß einem der Ansprüche 1 bis 8, bei der die Datenermittlungseinrichtung (10) ausgebildet ist, um das Ermitteln von sich ergebenden Verzerrungen und Kompressionsraten für die Frames der Framesequenz für den Fall der vollständigen Kodierung der Framesequenz mit solchen unterschiedlichen Stützfolgen (a,a,...,a) vorzunehmen, die für jedes Frame konstant einen unterschiedlichen vorbestimmten Wert aus dem vorbestimmten Satz aufweisen, und für den Fall der Kodierung einer echten Teilsequenz der Framesequenz von dem ersten Frame aus mit solchen Fragmentfolgen, die für eine jeweilige Stützfolge j mit dem ersten Wert der Stützfolge j beginnen, bis zum dem (i-1)-ten Wert mit der Stützfolge j identisch sind und an einem i-ten Wert der Stützfolge j mit einem anderen vorbestimmten Wert für den Kodierungsparameter enden, um ein Zuordnungsübergangsdiagramm zu erhalten, das einen Anfangszustand und
für jede Stützfolge j der Stützfolgen
für jede mögliche mit dem ersten Wert der Stützfolge j beginnende und bis zum dem i-ten Wert mit der Stützfolge j identische Teilfolge der Stützfolge j sowie für jede Fragmentfolge, die mit dem ersten Wert m der Stützfolge j beginnt, bis zum dem (i-1)-ten Wert mit der Stützfolge identisch ist und an einem i-ten Wert der Stützfolge j mit einem anderen vorbestimmten Wert k ungleich m für den Kodierungsparameter endet,
Zustände (j, i, m) und (j, i, k) und
zwischen jedem Paar von Zuständen (j,i,m) und (j,i+1,m) einen Zustandsübergang aufweist, dem die Verzerrung und die Kompressionsrate des (i+1)-ten Frames bei Kodierung mit der mit dem ersten Wert der Stützfolge j beginnenden und bis zum dem (i+1)-ten Wert mit der Stützfolge j identischen Teilfolge sowie m zugeordnet ist, und
zwischen jedem Paar von Zuständen (j,i,m) und (j,i+1,k) einen Zustandsübergang, dem die Verzerrung und die Kompressionsrate des (i+1)-ten Frames bei Kodierung mit der Fragmentfolge, die mit dem ersten Wert m der Stützfolge j beginnt, bis zum dem (i-1)-ten Wert mit der Stützfolge identisch ist und an einem i-ten Wert der Stützfolge j mit einem anderen vorbestimmten Wert k ungleich m für den Kodierungsparameter endet, sowie k zugeordnet ist,

14

aufweist.

**10.** Vorrichtung gemäß Anspruch 9, bei der die Datenschätzeinrichtung (202) ausgebildet ist, um jeden Zustandsübergang von (j,i,m) zu (j,i+1,k) zu demjenigen unter den Zuständen (x,i+1,y) mit freiwählbarem x unter den möglichen Stützfolgen und dem vorbestimmten Wert y derart, dass derselbe dem konstanten Wert der Stützfolge x entspricht, zuzuordnen, dessen zugeordnete Verzerrung zu der Verzerrung des Zustandsübergangs von (j,i,m) zu (j,i+1,k) den geringsten Unterschied aufweist, so dass ein Zustandsübergangsdiagramm mit dem Anfangszustand und einem Zustand pro vorbestimmten Wert des vorbestimmten Satzes wiederum pro Frame erhalten wird.

**11.** Vorrichtung gemäß einem der vorhergehenden Ansprüche, bei der das hybride Kodierungsschema ein Kodierungsmuster von IPPP...P aufweist.

**12.** Vorrichtung gemäß einem der vorhergehenden Ansprüche, bei der der Kodierungsparameter einen Quantisierungsparameter zur Verwendung bei einer Quantisierung von Prädiktionsfehlerwerten in dem hybriden Kodierungsschema definiert.

**13.** Vorrichtung gemäß einem der vorhergehenden Ansprüche, die ferner eine Einrichtung (30) zum Kodieren der Framesequenz unter Verwendung der bestimmten Folge von Werten für den Kodierungsparameter mittels des hybriden Kodierschemas aufweist.

**14.** Verfahren zum Bestimmen einer Folge von Werten für einen Kodierungsparameter eines hybriden Kodierschemas, die für jedes von N Frames einer Framesequenz einen Wert aufweist, der aus einem vorbestimmten Satz von M vorbestimmten Werten ausgewählt ist, aus $M^N$ möglichen Folgen, zur Verwendung für eine Kodierung der Framesequenz mittels des hybriden Kodierschemas, mit folgenden Schritten:

unter Verwendung des hybriden Kodierungsschemas, Ermitteln (10) von sich ergebenden Verzerrungen und Kompressionsraten für die Frames der Framesequenz für den Fall der vollständigen Kodierung der Framesequenz mit unterschiedlichen Stützfolgen von Werten für den Kodierungsparameter aus den $M^N$ möglichen Folgen, wobei die Stützfolgen zur Kodierung für jedes Frame der Framesequenz einen Wert aus dem vorbestimmten Satz von M vorbestimmten Werten aufweisen, und für den Fall der Kodierung einer echten Teilsequenz der Framesequenz, die sich von einem ersten Frame der Framesequenz aus bis zu einem vorbestimmten Frame erstreckt, mit Fragmentfolgen von Werten für den Kodierungsparameter, die zur Kodierung für jedes Frame von dem ersten Frame der Framesequenz bis zu dem vorbestimmten Frame der Framesequenz jeweils die gleichen Werte wie eine der Stützfolgen aber für das vorbestimmte Frame einen zu der einen Stützfolge unterschiedlichen Wert aufweisen, derart, dass eine echte Teilmenge der Menge von Verzerrungen und Kompressionsraten erhalten wird, wie sie durch Kodierung mittels aller möglichen Folgen der vorbestimmten Werte für den Kodierungsparameter für jedes Frame erhaltbar ist;
Ermitteln (202) geschätzter Verzerrungen und Kompressionsraten für Frames der Framesequenz, die auf das vorbestimmte Frame folgen, unter Zuordnung einer Fragmentfolge zu derjenigen der Stützfolgen, unter Verwendung von welcher eine für das vorbestimmte Frame erhaltene Verzerrung zu einer unter Verwendung der Fragmentfolge für das vorbestimmte Frame erhaltene Verzerrung einen möglichst geringen Unterschied aufweist; und
basierend auf den ermittelten sich ergebenden und geschätzten Verzerrungen und Kompressionsraten, Bestimmen (30) der Folge von Werten für den Kodierungsparameter des hybriden Kodierschemas.

**15.** Computer-Programm mit einem Programmcode zur Durchführung des Verfahrens nach Anspruch 14, wenn das Computer-Programm auf einem Computer abläuft.

**Claims**

**1.** Device for determining, from $M^N$ possible orders, an order of values for an encoding parameter of a hybrid encoding scheme, said device comprising, for each of N frames of a frame sequence, a value selected from a predetermined set of M predetermined values for the encoding parameter, for use for encoding the frame sequence by means of the hybrid encoding scheme, comprising
a data establishing means (10) for establishing, using the hybrid encoding scheme, resulting distortions and compression rates for the frames of the frame sequence for the case of the complete encoding of the frame sequence with different supporting orders of values for the encoding parameter, from the $M^N$ possible orders, the supporting orders comprising, for encoding, for each frame of the frame sequence, a value from the predetermined set of M predetermined values, and for the case of the encoding of a real partial sequence of the frame sequence, which extends from a first frame of the frame sequence to a predetermined frame of the frame sequence, with fragment orders of values for the encoding parameter, which comprise, for encoding, for each frame from the first frame of the frame sequence to the predetermined frame of the frame sequence, the same values, respectively, as one of the supporting orders, but which comprise, for the predetermined frame, a value different than the one supporting order, such that a real subset of the set of distortions and compression rates is obtained, as may be obtained by encoding by means of any possible orders of the predetermined values for the encoding parameter for each frame;

a data estimation means (202) for establishing estimated distortions and compression rates for frames of the frame sequence following the predetermined frame, under association of a fragment order to that of the supporting orders by use of which a distortion obtained for the predetermined frame comprises a difference as small as possible to a distortion obtained using the fragment order for the predetermined frame; and

a determination means (204) for determining the order of values for the encoding parameter of the hybrid encoding scheme, based on the established resulting and estimated distortions and compression rates.

2. Device according to claim 1, in which the data establishing means (10) comprises:

an encoding means (102) for encoding, by means of the hybrid encoding scheme, the frame sequence, using the different supporting orders of values for the encoding parameter for each frame of the frame sequence to obtain a sequence of encoded frames for each supporting order;

a determination means (104) for determining the distortion and the compression rate for each encoded frame of each sequence of encoded frames obtained for one of the supporting orders, so that each supporting order is associated with the distortion and the compression rate of the encoded frames of the sequence of encoded frames which is obtained for the respective supporting order; and

an establishing means (106) for establishing the distortion and the compression rate of encoded frames of an initial sequence of encoded frames, as obtained by encoding the real partial sequence of frames of the frame sequence from the first frame to the predetermined frame of the frame sequence by means of the hybrid encoding scheme using a predetermined one of the fragment orders of values for the encoding parameter for each frame of the partial sequence differing from a suborder of each supporting order relating from the first to the predetermined frame.

3. Device according to claim 2, in which the data estimating means (202) comprises:

a comparison means (202a) for comparing the distortion of the last encoded frame of the initial sequence of encoded frames established by the establishing means with the distortion for the corresponding encoded frame of the sequence of encoded frames obtained for the supporting orders, so as to obtain a comparison result; and

an association means (202b) for associating, based on the comparison result, the fragment order with one of the supporting orders to obtain, for the encoding parameter, an estimated supporting order of values which is comprised of the fragment order complemented by part of the supporting order associated with the fragment order, which is associated with the frames after the predetermined frame of the frame sequence, and which is associated with the distortions and compression rates of the initial sequence which are established by the establishing means and the determined distortions and encoding rates of encoded frames of the sequence of the encoded frames corresponding to the frames following the predetermined frame.

4. Device according to claim 3, in which the determination means (30) comprises:

a selection means (204) for selecting the order of values for the encoding parameter from a set including the supporting orders and the estimated supporting order, depending on the respectively associated distortions and compression rates.

5. Device according to claim 4, in which the encoding means (102) is configured to perform the encoding of the frame sequence, using supporting orders constantly comprising, for each frame, a different predetermined value from the predetermined set.

6. Device according to claim 4 or 5, in which the establishing means (106) is configured to establish the distortion and the compression rate of encoded frames of an initial sequence of encoded frames, as obtained by encoding the real partial sequence by means of the hybrid encoding scheme using a fragment order which differs from the suborder of a predetermined supporting order relating from the first frame to the predetermined frame only by replacing the last value of this suborder with another value from the predetermined set.

7. Device according to claim 6, in which the establishing means is configured to use, when establishing the distortion and the compression rate of the last encoded frame of the initial sequence of encoded frames, an intermediate result, representing a residual to a motion-compensated prediction of the predetermined frame, of the encoding of the frame sequence by the encoding means (102) by means of the hybrid encoding scheme using the predetermined supporting order, so as to continue, by means of the hybrid encoding scheme, the encoding of the predetermined frame using the other value for the encoding parameter.

8. Device according to claim 6 or 7, in which the establishing means (106), the comparison means (202a) and the association means (202b) are configured to repeat the establishing, the comparison and the association for a plurality of the frames for a plurality of the predetermined supporting orders.

9. Device according to one of claims 1 to 8, in which the data establishing means (10) is configured to perform establishing of resulting distortions and compression rates for the frames of the frame sequence for the case of the complete encoding of the frame sequence with such different supporting orders (a,a,...,a) which constantly comprise, for each frame, a different predetermined value from the predetermined set, and for the case of the encoding of a real partial sequence of the frame sequence from the first frame which such fragment orders which begin, for a respective supporting order j, with the first value of the supporting order j, which are identical, up to the (i-1)th value, with the supporting order j and which end, at a i-th value of the supporting order j, with another predetermined value for the encoding parameter, so as to obtain a state transition diagram comprising
an initial state and
for each supporting order j of the supporting orders
for each possible suborder of the supporting order j beginning with the first value of the supporting order j and being identical, up to the i-th value, with the supporting order j as well as
for each fragment order beginning with the first value m of the supporting order j, being identical, up to the (i-1)th value, with the supporting order and ending, at a i-th value of the supporting order j, with another predetermined value k unequal to m for the encoding parameter,
states (j, i, m) and (j, i, k) and
comprising, between each pair of states (j,i,m) and (j,i+1,m), a state transition associated with the distortion and the compression rate of the (i+1)th frame in the encoding with the suborder beginning with the first value of the supporting order j and being identical, up to the (i+1)th value, with the supporting order j, as well as m, and, between each pair of transitions (j,i,m) and (j,i+1,k), a state transition associated with the distortion and the compression rate of the (i+1)th frame in encoding with the fragment order beginning with the first value m of the supporting order j, being identical, up to the (i-1)th value, with the supporting order and ending, at an i-th value of the supporting order j, with another predetermined value k unequal to m for the encoding parameter, as well as k.

10. Device according to claim 9, in which the data estimating means (202) is configured to associate each state transition from (j,i,m) to (j,i+1,k) with that among the transitions (x,i+1,y) with a free-selectable x under the possible supporting orders and the predetermined value y, such that it corresponds to the constant value of the supporting order x whose associated distortion comprises the smallest difference to the distortion of the state transition from (j,i,m) to (j,i+1,k), so that a state transition diagram is obtained, in turn per frame, with the initial state and a state per predetermined value of the predetermined set.

11. Device according to one of the preceding claims, in which the hybrid encoding scheme comprises an encoding pattern of IPPP...P.

12. Device according to one of the preceding claims, in which the encoding parameter defines a quantization parameter for use in a quantization of prediction error values in the hybrid encoding scheme.

13. Device according to one of the preceding claims, further comprising a means (30) for encoding the frame sequence using the determined order of values for the encoding parameter by means of the hybrid encoding scheme.

14. Method for determining, from $M^N$ possible orders, an order of values for an encoding parameter of a hybrid encoding, said device comprising, for each of N frames of a frame sequence, a value selected from a predetermined set of M predetermined values for the encoding parameter, for use for encoding the frame sequence by means of the hybrid encoding scheme, comprising
using the hybrid encoding scheme, establishing (10) resulting distortions and compression rates for the frames of the frame sequence for the case of the complete encoding of the frame sequence with different supporting orders of values for the encoding parameter, from the $M^N$ possible orders, the supporting orders comprising, for encoding, for each frame of the frame sequence, a value from the predetermined set of M predetermined values, and for the case of the encoding of a real partial sequence of the frame sequence, which extends from a first frame of the frame sequence to a predetermined frame of the frame sequence, with fragment orders of values for the encoding parameter, which comprise, for encoding, for each frame from the first frame of the frame sequence to the predetermined frame of the frame sequence, the same values, respectively, as one of the supporting orders, but which comprise, for the predetermined frame, a value different than the one supporting order, such that a real subset of the set of distortions and compression rates is obtained, as may be obtained by encoding by means of any possible orders of the predetermined values for the encoding parameter for each frame;

establishing (202) estimated distortions and compression rates for frames of the frame sequence following the predetermined frame, associating a fragment order with that of the supporting orders by use of which a distortion obtained for the predetermined frame comprises a difference as small as possible to a distortion obtained using the fragment order for the predetermined frame; and

based on the established resulting and estimated distortions and compression rates, determining (30) the order of values for the encoding parameter of the hybrid encoding scheme.

**15.** Computer program with a program code for performing the method according to claim 14 when the computer program runs on a computer.

**Revendications**

**1.** Dispositif pour déterminer une succession de valeurs pour un paramètre de codage d'un schéma de codage hybride présentant, pour chacune de N trames d'une séquence de trames, une valeur qui est sélectionnée parmi un ensemble prédéterminé de M valeurs prédéterminées pour le paramètre de codage, parmi $M^N$ successions possibles, à utiliser pour un codage de la séquence de trames au moyen du schéma de codage hybride, avec

un moyen de détermination de données (10) destiné à déterminer, à l'aide du schéma de codage hybride, des distorsions et taux de compression qui se produisent pour les trames de la séquence de trames en cas de codage complet de la séquence de trames avec différentes successions d'appui de valeurs pour le paramètre de codage parmi les $M^N$ successions possibles, les successions d'appui pour le codage de chaque trame de la séquence de trames présentant une valeur parmi l'ensemble prédéterminé de M valeurs prédéterminées, et en cas de codage d'une vraie séquence partielle de la séquence de trames qui s'étend d'une première trame de la séquence de trames à une trame prédéterminée de la séquence de trames, avec des successions de fragments de valeurs pour le paramètre de codage qui présentent pour le codage, pour chaque trame de la première trame de la séquence de trames à la trame prédéterminée de la séquence de trames, chaque fois les mêmes valeurs que l'une des successions d'appui, toutefois, pour la trame prédéterminée, une valeur différente de l'une succession d'appui, de sorte qu'il soit obtenu une vraie quantité partielle de la quantité de distorsions et de taux de compression, telle qu'elle peut être obtenue par codage au moyen de toutes les successions possibles des valeurs prédéterminées pour le paramètre de codage pour chaque trame;

un moyen d'estimation de données (202) destiné à déterminer des distorsions et taux de compression estimés pour les trames de la séquence de trames suivant la trame prédéterminée, tout en associant une succession de fragments à celle parmi les successions d'appui à l'aide de laquelle une distorsion obtenue pour la trame prédéterminée présente, par rapport à une distorsion obtenue à l'aide de la succession de fragments pour la trame prédéterminée, une différence aussi faible que possible; et

un moyen de détermination (204) destiné à déterminer, sur base des distorsions et taux de compression se produisant et estimés déterminés, la succession de valeurs pour le paramètre de codage du schéma de codage hybride.

**2.** Dispositif selon la revendication 1, dans lequel le moyen de détermination de données (10) présente les caractéristiques suivantes:

un moyen de codage (102) destiné à coder, au moyen du schéma de codage hybride, la séquence de trames à l'aide des différentes successions d'appui de valeurs pour le paramètre de codage pour chaque trame de la séquence de trames, pour obtenir une séquence de trames codées pour chaque succession d'appui;

un moyen de détermination (104) destiné à déterminer la distorsion et le taux de compression pour chaque trame codée de chaque séquence de trames codées qui est obtenue pour l'une des successions d'appui, de sorte que soient associés à chaque succession d'appui la distorsion et le taux de compression des trames codées de la séquence de trames codées qui sont obtenus pour la succession d'appui respective; et

un moyen de détermination (106) destiné à déterminer la distorsion et le taux de compression de trames codées d'une séquence initiale de trames codées, telle qu'elle est obtenue par codage de la vraie séquence partielle de trames de la séquence de trames de la première trame à la trame prédéterminée de la séquence de trames au moyen du schéma de codage hybride à l'aide de l'une prédéterminée des successions de fragments de valeurs pour le paramètre de codage pour chaque trame de la séquence partielle qui diffère d'une séquence partielle de chaque succession d'appui se rapportant à la première trame à la trame prédéterminée.

3. Dispositif selon la revendication 2, dans lequel le moyen d'estimation de données (202) présente les caractéristiques suivantes:

un moyen de comparaison (202a) destiné à comparer la distorsion, déterminée par le moyen de détermination, de la dernière trame codée de la séquence initiale de trames codées avec la distorsion pour la trame codée correspondante de la séquence de trames codées qui est obtenue pour les successions d'appui, pour obtenir un résultat de comparaison; et

un moyen d'association (202b) destiné à associer, sur base du résultat de comparaison, la succession de fragments à l'une des successions d'appui, pour obtenir une succession d'appui de valeurs pour le paramètre de codage qui se compose de la succession de fragments complétée d'une partie de la succession d'appui associée à la succession de fragments qui est associée aux trames après la trame prédéterminée de la séquence de trames, et à laquelle sont associés les distorsions et taux de compression, déterminés par le moyen de détermination, de la séquence initiale et les distorsions et taux de compression déterminés des trames codées, correspondant aux trames suivant la trame prédéterminée, de la séquence de trames codées qui est obtenue pour la succession d'appui qui est associée à la succession de fragments prédéterminée.

4. Dispositif selon la revendication 3, dans lequel le moyen de détermination (30) présente la caractéristique suivante:

un moyen de sélection (204) destiné à sélectionner la succession de valeurs pour le paramètre de codage parmi une quantité comprenant les successions d'appui et la succession d'appui estimée en fonction des distorsions et taux de compression associés respectifs.

5. Dispositif selon la revendication 4, dans lequel le moyen de codage (102) est réalisé de manière à effectuer le codage de la séquence de trames à l'aide de successions d'appui présentant pour chaque trame constamment une valeur prédéterminée différente de l'ensemble prédéterminé.

6. Dispositif selon la revendication 4, dans lequel le moyen de détermination (106) est réalisé de manière à déterminer la distorsion et le taux de compression de trames codées d'une séquence initiale de trames codées telle qu'elle est obtenue par codage de la vraie séquence partielle au moyen du schéma de codage hybride à l'aide d'une succession de fragments qui ne diffère de la succession partielle d'une succession d'appui prédéterminée, qui se rapporte à la première trame à la trame prédéterminée, que par le remplacement de la dernière valeur de cette succession partielle par une autre valeur de l'ensemble prédéterminé.

7. Dispositif selon la revendication 6, dans lequel le moyen de détermination est réalisé de manière à utiliser, lors de la détermination de la distorsion et du taux de compression de la dernière trame codée de la séquence initiale de trames codées, un résultat intermédiaire du codage de la séquence de trames par le moyen de codage (102) au moyen du schéma de codage hybride à l'aide de la succession d'appui prédéterminée qui représente un reste d'une prédiction compensée en mouvement de la trame prédéterminée, pour continuer, au moyen du schéma de codage hybride, le codage de la trame prédéterminée à l'aide de l'autre valeur pour le paramètre de codage.

8. Dispositif selon la revendication 6 ou 7, dans lequel le moyen de détermination (106), le moyen de comparaison (202a) et le moyen d'association (202b) sont réalisés de manière à répéter la détermination, la comparaison et l'association pour une pluralité de trames pour une pluralité de successions d'appui prédéterminées.

9. Dispositif selon l'une des revendications 1 à 8, dans lequel le moyen de détermination de données (10) est réalisé de manière à procéder à la détermination de distorsions et taux de compression se produisant pour les trames de la séquence de trames, en cas de codage complet de la séquence de trames, avec des successions d'appui différentes (a, a, ..., a) présentant, pour chaque trame, constamment une valeur prédéterminée différente de l'ensemble prédéterminé et, en cas de codage d'une vraie séquence partielle de la séquence de trames de la première trame, avec des successions de fragments qui commencent, pour une succession d'appui j respective, par la première valeur de la succession d'appui j et sont, jusqu'à la (i-1)-ième valeur, identiques à la succession d'appui j et se terminent, à une i-ième valeur de la succession d'appui j, par une autre valeur prédéterminée pour le paramètre de codage, pour obtenir un diagramme de transition d'association qui présente

un état initial et

pour chaque succession d'appui j des successions d'appui

pour chaque possible succession partielle qui commence par la première valeur de la succession d'appui j et est, jusqu'à la i-ième valeur, identique à la succession d'appui j, de la succession d'appui j ainsi que

pour chaque succession de fragments qui commence par la première valeur m de la succession d'appui j, est, jusqu'à la (i-1)-ième valeur, identique à la succession d'appui et se termine, à une i-ième valeur de la succession d'appui j, par une autre valeur prédéterminée k différente de m pour le paramètre de codage,

des états (j, i, m) et (j, i, k) et

présente, entre chaque paire d'états (j, i, m) et (j, i+1, m), une transition d'état à laquelle sont associés la distorsion et le taux de compression de la (i+1)-ième trame en cas de codage avec la succession partielle qui commence par la première valeur de la succession d'appui j et est identique, jusqu'à la (i+1)-ième valeur, à la succession d'appui j ainsi que m, et, entre chaque paire d'états (j, i, m) et (j, i+1, k), une transition d'état à laquelle sont associés la distorsion et le taux de compression de la (i+1)-ième trame en cas de codage avec la succession partielle qui commence par la première valeur m de la succession d'appui j, est identique, jusqu'à la (i+1)-ième valeur, à la succession d'appui et se termine, à une i-ième valeur de la succession d'appui j, par une autre valeur prédéterminée k différente de m pour le paramètre de codage, ainsi que k.

10. Dispositif selon la revendication 9, dans lequel le moyen d'estimation de données (202) est réalisé de manière à associer chaque transition d'état de (j, i, m) à (j, i+1, k) à celui parmi les états (x, i+1, y) à x sélectionnable librement parmi les possibles successions d'appui et à la valeur prédéterminée y de sorte qu'il corresponde à la valeur constante de la succession d'appui x dont la distorsion associée présente, par rapport à la distorsion de la transition d'état de (j, i, m) à (j, i+1, k), la différence la plus petite, de sorte qu'il soit à nouveau obtenu par trame un diagramme de transition d'état avec l'état initial et un état par valeur prédéterminée de l'ensemble prédéterminé.

11. Dispositif selon l'une des revendications précédentes, dans lequel le schéma de codage hybride présente un modèle de codage de IPPP...P.

12. Dispositif selon l'une des revendications précédentes, dans lequel le paramètre de codage définit un paramètre de quantification destiné à être utilisé lors d'une quantification de valeurs d'erreur de prédiction dans le schéma de codage hybride.

13. Dispositif selon l'une des revendications précédentes, présentant par ailleurs un moyen (30) destiné à coder la séquence de trames à l'aide de la succession déterminée de valeurs pour le paramètre de codage au moyen du schéma de codage hybride.

14. Procédé pour déterminer une succession de valeurs pour un paramètre de codage d'un schéma de codage hybride présentant, pour chacune de N trames d'une séquence de trames, une valeur sélectionnée parmi un ensemble prédéterminé de M valeurs prédéterminées, parmi $M^N$ successions possibles, à utiliser pour un codage de la séquence de trames au moyen du schéma de codage hybride, aux étapes suivantes consistant à:

déterminer (10), à l'aide du schéma de codage hybride, des distorsions et taux de compression qui se produisent pour les trames de la séquence de trames en cas de codage complet de la séquence de trames avec différentes successions d'appui de valeurs pour le paramètre de codage parmi les $M^N$ successions possibles, les successions d'appui pour le codage de chaque trame de la séquence de trames présentant une valeur parmi l'ensemble prédéterminé de M valeurs prédéterminées, et en cas de codage d'une vraie séquence partielle de la séquence de trames qui s'étend d'une première trame de la séquence de trames à une trame prédéterminée, avec des successions de fragments de valeurs pour le paramètre de codage qui présentent pour le codage, pour chaque trame de la première trame de la séquence de trames à la trame prédéterminée de la séquence de trames, chaque fois les mêmes valeurs que l'une des successions d'appui, toutefois, pour la trame prédéterminée, une valeur différente de l'une succession d'appui, de sorte qu'il soit obtenu une vraie quantité partielle de la quantité de distorsions et de taux de compression, telle qu'elle peut être obtenue par codage au moyen de toutes les successions possibles des valeurs prédéterminées pour le paramètre de codage pour chaque trame;

déterminer (202) des distorsions et taux de compression estimés pour les trames de la séquence de trames suivant la trame prédéterminée, tout en associant une succession de fragments à celle parmi les successions d'appui à l'aide de laquelle une distorsion obtenue pour la trame prédéterminée présente, par rapport à une distorsion obtenue à l'aide de la succession de fragments pour la trame prédéterminée, une différence aussi faible que possible; et

déterminer (30), sur base des distorsions et taux de compression se produisant et estimés déterminés, la succession de valeurs pour le paramètre de codage du schéma de codage hybride.

**15.** Programme d'ordinateur avec un code de programme pour réaliser le procédé selon la revendication 14 lorsque le programme d'ordinateur est exécuté sur un ordinateur.

102

vollständiges Kodieren der Framesequenz mit festen
Quantisierungsparametern $Q_i \in \{ q1, q2, ..., qM\}$

104

Bestimmen der Verzerrung D und des Komprimierungsgrades R für jedes
kodierte Frame aus der Kodierung mit festem $Q_i$ um D(q1), R(q1),
D(q1, q1), R(q1,q1), ..., D(q2), R(q2), D(q2, q2), R(q2,q2), ..., D(qM),
R(qM), D(qM, qM), R(qM,qM), ... zu erhalten

10

106

Ermitteln der Verzerrung D und des Komprimierungsgrades R, wie sie sich
für jedes Frame 2 ... N durch Variieren der Kodierungen mit festem $Q_i$
dadurch ergeben, dass bis zu dem jeweiligen Frame mit dem festen
Quantisierungsparameter $Q_i$ und das jeweilige Frame selbst mit den
anderen Quantisierungsparametern aus {q1, ..., qM} kodiert wird, um
D(a, b), R(a, b), D(a, a, b), R(a, a, b), D(a, ..., a, b), R(a, ..., a, b) zu
erhalten mit a, b $\in$ {q1, ..., qM) und a $\neq$ b

202a

Vergleichen der ermittelten Ds mit den Ds des entsprechenden Frames
aus der Kodierung mit festen $Q_i$

202b

20

202

abhängig von dem Vergleich, Zuordnen des ermittelten Ds und Rs zu
derjenigen Kodierung mit festem $Q_i$, denen entsprechenden Frame das
ähnlichste D hat,

204

unter Ausnutzung der Zuordnung des ermittelten Ds und Rs, Bestimmen
einer optimalen Folge von Quantisierungsparametern $Q_i$

30

Kodierung der Framesequenz unter Verwendung der optimalen Folge

Fig. 1

Fig. 2

EP 1 922 879 B1

Fig.3

Fig. 4

EP 1 922 879 B1

Fig. 5

Fig. 6

cnn

Y-PSNR [dB]

Rate [kbit/frame]

foreman

Y-PSNR [dB]

Rate [kbit/frame]

IIS Festquantisierungsalgorithmus
IIS Multipass (RDM9)
DIVX Multipass

| Sequenzname | # frames (N) | IIS RDM ggb. IIS mit fesem Q | IIS RDM ggb. DivX 5.2 |
|---|---|---|---|
| Foreman | 150 | 0,09 | 0,89 |
| Paris | 150 | 0,26 | 1,17 |
| Football | 125 | 0,02 | 0,63 |
| Tempete | 125 | 0,01 | 0,53 |
| CNN | 1000 | 0,74 | 1,92 |
| Spiderman | 1000 | 0,33 | 0,66 |
| Red October | 1000 | 0,34 | 0,65 |
| Durchschnittlich | | 0,26 | 0,92 |

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **A. Ortega ; K. Ramchandran ; M. Vetterli.** Bit Allocation for Dependent Quantization with Applications to Multiresolution and MPEG Video Coders. *IEEE Transactions on Image Processing,* September 1994, vol. 3 (5
- **G.J. Sullivan ; T. Wiegand.** Rate-Distortion Optimization for Video Compression. *IEEE Signal Processing magazine,* November 1998, 74-90

- Bit Allocation for Dependent Quantization with Applications to Multiresolution and MPEG Video Coders. **Ramchandran K. et al.** IEEE Transactions on Image Processing. IEEE Service Center, 01. September 1994, vol. 3, 533-545
- **A. Ortega ; K. Ramchandran.** Rate-Distortion Methods for Image and Video Compression. *IEEE Signal Processing magazine,* November 1998, 23-50
- Test Material and Reference Results for Video Codec Candidate Qualification Criteria. *Tampere,* November 2003